(19) Europäisches Patentamt
European Patent Office
Office européen des brevets

(11) **EP 1 953 513 A1**

(12) **EUROPEAN PATENT APPLICATION**
published in accordance with Art. 158(3) EPC

(43) Date of publication:
**06.08.2008 Bulletin 2008/32**

(51) Int Cl.:
*G01K 15/00* (2006.01)    *G01J 1/42* (2006.01)
*G01J 5/14* (2006.01)    *G01K 7/02* (2006.01)

(21) Application number: **06832731.1**

(22) Date of filing: **16.11.2006**

(86) International application number:
**PCT/JP2006/322842**

(87) International publication number:
**WO 2007/058250 (24.05.2007 Gazette 2007/21)**

(84) Designated Contracting States:
**DE**

(30) Priority: **17.11.2005 JP 2005332341**
**03.03.2006 JP 2006058260**
**27.09.2006 JP 2006262343**
**06.11.2006 JP 2006300301**

(71) Applicant: **Kimura, Mitsuteru**
**Miyagi-gun,**
**Miyagi-ken 985-0821 (JP)**

(72) Inventor: **Kimura, Mitsuteru**
**Miyagi-gun,**
**Miyagi-ken 985-0821 (JP)**

(74) Representative: **HOFFMANN EITLE**
**Patent- und Rechtsanwälte**
**Arabellastrasse 4**
**81925 München (DE)**

(54) **CALIBRATING METHOD OF CURRENT DETECTION TYPE THERMOCOUPLE OR THE LIKE, CALIBRATION METHOD OF OFFSET OF OPERATIONAL AMPLIFIER, CURRENT DETECTION TYPE THERMOCOUPLE, INFRARED SENSOR AND INFRARED DETECTOR**

(57)    To calibrate a thermocouple, a calibrating thermocouple, made of the same thermocouple material as a detecting thermocouple, is used. An absolute thermoelectric power $E_{ro}$ of the calibrating thermocouple is determined in advance, and the detecting thermocouple is assumed to have the same $E_{ro}$. An internal resistance $r_s$ of the detecting thermocouple is obtained, and a short-circuit current $I_s$ is measured with a measured temperature difference $\Delta Ts$ using an operational amplifier, and the temperature difference $\Delta Ts$ is calculated. An offset of the operational amplifier is also calibrated. The thermocouples and switches are connected to an inverting input terminal of the operational amplifier, so that the sensors can be selected. Alternatively, these are connected to a non-inverting input terminal, allowing a plurality of the thermocouples to be switched, while a small resistor r is connected to the inverting terminal thereof, to provide an equivalent current detection type thermocouple. In this manner, even if a hot junction or a cold junction is formed on a cantilever or a diaphragm, the temperature can be calibrated or corrected easily at a high precision.

FIG.1

EP 1 953 513 A1

## Description

TECHNICAL FIELD

The present invention relates to a method for calibrating a so-called current detection type thermocouple that obtains a temperature difference to be detected upon detecting a temperature difference using a thermocouple, based a current flowing through a closed circuit including the thermocouple, not based on an open-circuit voltage of its thermoelectromotive force. Furthermore, the present invention relates to a method for calibrating an offset in an operational amplifier that is used for measuring a short-circuit current of the current detection type thermocouple. Still furthermore, the present invention relates to a current detection type thermocouple, an equivalent current detection type thermocouple, and an infrared sensor, and an infrared detecting apparatus applied with the foregoing.

BACKGROUND ART

Conventionally, to detect a temperature difference, two junctions, a hot junction and a cold junction, of a thermocouple are arranged at locations having a temperature difference to be detected, with respect to a given reference temperature. A temperature difference is then created between the two junctions, and the temperature difference is calculated from an open-circuit thermoelectromotive force generated thereby.

The inventor of the present application has invented "METHOD FOR DETECTING TEMPERATURE DIFFERENCE, TEMPERATURE SENSOR, AND INFRARED SENSOR USING THE SAME" (Japanese Patent Application No. 2004-026247). In this disclosure, the inventor proposed a method for measuring a temperature difference by measuring a short-circuit current, instead of measuring the open-circuit voltage as the thermoelectromotive force generated by the temperature difference between the two junctions, the hot junction and the cold junction, of the thermocouple. The inventor named this method as a current detection type thermocouple, and has experimentally demonstrated advantages thereof.

The basis for a fundamental principle of the current detection type thermocouple will be now explained. A Seebeck coefficient $\alpha_s$ of a semiconductor can be expressed as Formula 1 below with respect to the resistivity $\rho$ thereof.

$$[Formula\ 1]$$

$$\alpha_s = \frac{mk}{q} In \frac{\rho}{\rho_0}$$

Where, k is Boltzmann constant, and q is the elementary electric charge. With Si, $\rho_0 = 5 \times 10^{-6}$ $\Omega$m, m = 2.6 is established. From the formula, the greater resistivity $\rho$ is, the greater Seebeck coefficient $\alpha_s$ will be. Therefore, conventionally, a semiconductor having a high resistivity $\rho$ is often used for manufacturing a thermocouple or a thermopile. However, if a semiconductor whose resistivity is too high is used, the thermopile would end up having an extremely high internal resistance. Therefore, many have been searching for a point of compromise. The inventor of the present invention found out that the Formula 1 is also suggesting another fact. That is, even if the resistivity $\rho$ is reduced by three to four digits, the Seebeck coefficient $\alpha_s$ would be reduced only by one third to one ninth. A conductivity, which is an inverse of the resistivity, should be proportional to a current that flows through a short circuit of a thermocouple. Therefore, if a thermocouple with an extremely low resistivity is created and a short-circuit current therethrough can be measured somehow, it could be expected that a thermocouple or a thermopile with extremely higher sensitivity and S/N ratio can be obtained, in comparison with conventional examples.

However, depending on the shape of the current detection type thermocouple, the internal resistance of thereof changes, and a current could flow at different level even with the same thermoelectromotive force. No established calibration method has been available for detecting a temperature change precisely, with the thermocouple having a hot junction on a cantilever, a micro-airbridge, or a diaphragm. Thus, a calibration method that can be used easily with a simple structure, and a current detection type thermocouple using such a method has been waited for.

An infrared sensor, such as one used for a radiation thermometer e.g., an ear thermometer, has been using a thermopile. The thermopile includes serially-connected thermocouples, enabling an open-circuit electromotive force to be increased even with the same temperature difference. However, because almost a hundred of extremely thin thermocouples (2 micrometers or so) are serially connected, the internal resistance of the thermopile becomes extremely high, resulting in lower S/N and lower sensitivity. Moreover, an advanced technology is required for manufacturing such thermopiles.

To take out an output of each of the thermocouples independently, each of the thermocouples may simply include an operational amplifier. However, the larger the number of the thermocouples is, the more the operational amplifiers are required. To take out an output of each of the thermocouples independently with a single operational amplifier, for example, a switch can be provided to connect the thermocouples to the operational amplifier. However, an ON resistance of a generally-available analog switch is approximately 5 ohms. If such a large switch ON resistance is connected serially to the thermocouples, the internal resistance of the thermocouples would appear high, and the ON resistance could limit the short-circuit current of the current detection type thermocouples. Therefore, it has long been desired to provide a simple and convenient method for taking out the output of each of the thermocouples independently using a single operational amplifier.

[Patent Document 1] Japanese Patent Application No 2004-026247 (Japanese Patent Application Laid-open No. 2005-221238)

[Non-Patent Document 1] P. M. SARRO et al., Sensors and Actuators, Vol. 10, 1986, pp. 321-346

DISCLOSURE OF INVENTION

PROBLEM TO BE SOLVED BY THE INVENTION

An object of the present invention is to provide a method for calibrating a current detection type thermocouple to enable a precise temperature calibration or correction with a simple structure, even with a hot junction or a cold junction formed on a cantilever, a micro-air-bridge, or a diaphragm. Another object of the present invention is to provide a method for calibrating and correcting an offset of an operational amplifier that is used for measuring a short-circuit current of the current detection type thermocouple, the offset mainly being caused by a temperature drift. Still another object of the present invention is to provide a current detection type thermocouple having necessary components for such a calibration, a current detection type thermocouple that can reduce the internal resistance thereof equivalently, a method for selecting a particular thermocouple from a plurality of thermocouples, and a sensitive and inexpensive infrared sensor and infrared detection apparatus using such thermocouples.

MEANS FOR SOLVING PROBLEM

To achieve the object, a method for calibrating a current detection type thermocouple as set forth in claim 1 of the present invention is for calibrating a current detection type thermocouple that detects a temperature difference using a short-circuit current flowing in a pair of thermocouples, and includes, with a calibrating thermocouple formed of a same thermocouple material as that of a detecting thermocouple, determining an absolute thermoelectric power $E_{ro}$ of the calibrating thermocouple using an open-circuit thermoelectromotive force Vr where a heating unit generates a given temperature difference $\Delta$Tr between two junctions, a hot junction and a cold junction, of the calibrating thermocouple, and the temperature difference $\Delta$Tr is measured, wherein the detecting thermocouple is deemed to have the same absolute thermoelectric power $E_{ro}$; measuring an internal resistance $r_s$ of a system provided with the detecting thermocouple at a temperature around a measured temperature; measuring a short-circuit current $I_s$ caused due to a measured temperature difference $\Delta$Ts generated at the detecting thermocouple, by using an imaginary short in an operational amplifier with the detecting thermocouple being connected to an inverting input terminal the an operational amplifier; and determining the measured temperature difference $\Delta$Ts by using the absolute thermoelectric power $E_{ro}$ of the calibrating thermocouple and the internal resistance $r_s$.

The operational amplifier may be any measuring instrument that cancels out the internal resistance of a measuring instrument provided in the current detecting unit. An operational amplifier (OP Amp) herein represents the current detecting unit having such a function.

A thermocouple is generally manufactured as follows. Two different conductors made of, for example, metals, semiconductors (a combination of a p-type and an n-type), semimetals, or a combination of a metal and a semiconductor, are coupled together to form a junction. This junction is used as a hot junction, for example, and the other end of the two different conductors is used as a cold junction indicating a reference temperature. The open-circuit thermoelectromotive force between the two conductors at the cold junction is measured, and mapped to a temperature difference between the hot junction and the cold junction. In this manner, the temperature difference is measured. The cold junction is often provided on a heat sink.

The current detection type thermocouple according to an aspect of the present invention detects a temperature difference using a current detection type thermocouple, unlike a conventional technology that measures an open-circuit thermoelectromotive force. Therefore, a current detecting unit is used. However, it is preferable to use a measuring instrument, which is provided to the current detecting unit, whose internal resistance can be equivalently cancelled out to zero, such as an operational amplifier (OP Amp). In this manner, a short-circuit current flowing through the thermocouple can be measured easily. The internal resistance of the thermocouple varies depending on a material, a size, or a shape of the two conductors provided to the thermocouple. Therefore, the combination of the materials used for the conductors needs to be selected so as to bring the internal resistance as low as possible, so that a greater current flows with the same thermoelectromotive force. Especially, it is preferable to use a thermocouple having a large thermoelectromotive force, that is, a material with a high Seebeck coefficient corresponding to an absolute thermoelectric power $E_o$.

In the method for calibrating the current detection type thermocouple according to an aspect of the present invention, an absolute thermoelectric power $E_{ro}$ of the calibrating thermocouple can be obtained by Vr/$\Delta$Tr, where $\Delta$Tr is a temperature difference generated by the heating unit between the two junctions of the calibrating thermocouple, and Vr is the open-circuit thermoelectromotive force of the calibrating thermocouple generated thereby. Here it is assumed that the detecting thermocouple has the same absolute thermoelectric power $E_{ro}$. Therefore, using an internal resistance $r_s$, measured

approximately at a measured temperature, of the detecting thermocouple itself and a system including the detecting thermocouple with the leads thereof and the like included, the measured temperature difference $\Delta Ts$ can be expressed as follows, using the short-circuit current $I_s$ generated by the measured temperature $\Delta Ts$ in the detecting thermocouple. Here, this calculation uses a fact that, based on the Thevenin's theorem, the short-circuit current $I_s$ can be calculated as the value obtained by dividing the open-circuit electromotive force ($\Delta Ts \cdot E_{ro}$) that is generated at the detecting thermocouple by the measured temperature difference $\Delta Ts$, by the internal resistance $r_s$ of the system including the detecting thermocouple.

[Formula 2]

$$\Delta Ts = \frac{r_s}{E_{ro}} Is$$

In the method for calibrating the current detection type thermocouple as set forth in claim 2 of the present invention, the calibrating thermocouple and the detecting thermocouple are thin film thermocouples formed on the same substrate. Because these thermocouples can be arranged near to each other, a precision of the calibration can advantageously be improved.

In the method for calibrating a current detection type thermocouple as set forth in claim 3 of the present invention, a heater is used as the heating unit. It is possible to generate the temperature difference $\Delta Tr$ by heating up a part of the substrate with a laser beam irradiation. However, it is more convenient to use a heater that generates Joule heat.

If a heater is provided on the substrate in advance, the temperature difference $\Delta Tr$ can be better reproduced, making the calibration easier.

In the method for calibrating the current detection type thermocouple as set forth in claim 4 of the present invention, the temperature difference $\Delta Tr$ between the two junctions of the calibrating thermocouple is measured with a pair of temperature sensors provided on a same substrate where the calibrating thermocouple is provided. Because a pair of the sensors is formed on the same substrate where the calibrating thermocouple is formed, the calibration can be performed easily.

If a pn-coupling is used for the pair of the temperature sensors, such as in a pn-coupled diode or a transistor, it is advantageous in that the sensors can be formed on the semiconductor substrate in the same process as the heater or the thermocouples. In addition, a high precision and mass production become possible using photolithography.

If the thermocouples are used for the pair of the temperature sensors, known thermocouples made of pure metals, for example, thin film thermocouples made of gold and nickel may be used. In this arrangement, the temperature difference $\Delta Tr$ can be brought up to a higher value, for example, 1°C. Therefore, a sufficient precision can be achieved with the known thin film thermocouples. Thus, the temperature difference may be obtained based on the open-circuit thermoelectromotive force, as in a conventional thermocouple.

In the method for calibrating the current detection type thermocouple as set forth in claim 5 of the present invention, a semiconductor, added with an impurity in a density high enough to degenerate so as to reduce a resistance thereof, is used as at least one of conductors provided to the thermocouples. Generally speaking, in a silicon semiconductor, it is better to use a degenerated n-type semiconductor, because many carriers of the n-type semiconductor are the electrons with greater mobility than those of p-type, enabling the resistance thereof to be reduced. It should be more advantageous to use a metallic thin film with a small resistivity as the other conductor, even if the thermoelectromotive force of such a film is low.

In the method for calibrating the current detection type thermocouple as set forth in claim 6 of the present invention, a junction (for example, a hot junction) of the thin film detecting thermocouple is formed on a thin film that is thermally separated from the substrate, and the other junction (for example, a cold junction) of the thermocouple is formed on the substrate. The thin film that is thermally separated from the substrate means a thin film manufactured from a thin film, such as a cantilever, a micro-air-bridge, or a diaphragm, floating in midair by being supported by, for example, thin film beams supported on the substrate to increase the thermal resistance and to reduce the heat conductivity.

A method for calibrating an offset of an operational amplifier as set forth in claim 7 of the present invention is for calibrating an offset of an operational amplifier used for detecting a short-circuit current in an current detection type thermocouple detecting a temperature difference using a short circuit current in the thermocouple, wherein a predetermined resistor having an ignorable thermoelectromotive force is provided; the resistor is connectable to an input stage of a same or another operational amplifier to which the current detection type thermocouple is connected; an output of the operational amplifier provided with the thermocouple is compared with an output of the operational amplifier provided with the resistor; and the offset of the operational amplifier is calibrated based on comparison data.

If the temperature difference is extremely small, such as in the current detection type thermocouple being used as an infrared sensor, the short-circuit current in the current detection type thermocouple will also be extremely low. Such a short-circuit current can often reach almost the same level as the offset current generated by a temperature drift, for example, at the input stage of the operational amplifier used for detecting the short-circuit current. Moreover, it often becomes difficult to distinguish the short-circuit current from a circuit current based on the offset voltage generated by a temperature drift, for example, at the input stage. The operational amplifier needs to be calibrated, for example, by correcting the temperature drift, caused by a change in ambient temperature or by self-heating in the operational amplifier, as required, although such correction might not be required in an operational amplifier provided with a chopper.

The offset of the operational amplifier may be corrected by preparing two operational amplifiers, one of which has an input stage thereof connected to the current detection type thermocouple, and the other has an input stage connected to a predetermined resistor, and using this differential circuit. In this arrangement, it is preferable to use the two operational amplifiers formed on the same semiconductor chip, because the temperature properties of such amplifiers are almost the same, and the amplifiers are exposed to almost the same temperature environment. It is also preferable to use the predetermined resistor having the internal resistance of the current detection type thermocouple. It is also better to form the predetermined resistor on the same area as the current detection type thermocouple so that the predetermined resistor and the current detection type thermocouple are exposed to almost the same inductive noises from ambient environment.

The method for calibrating an offset of an operational amplifier as set forth in claim 8 of the present invention, according to the method for calibrating an offset of an operational amplifier of claim 7, uses a single operational amplifier capable of switching from the thermocouple connected to an input stage of the operational amplifier to a predetermined resistor, and uses data obtained at the shift to the predetermined resistor for calibration.

A method for calibrating an offset of an operational amplifier used for detecting a short-circuit current in a current detection type thermocouple detecting a temperature difference using a short-circuit current flowing therethrough, as set forth in claim 9, includes, with two pair of thermocouples provided at positions where a same measured temperature difference $\Delta Ts$ occurs so that the thermocouples are connectable in directions opposing to each other, measuring the measured temperature difference $\Delta Ts$ with one of the thermocouples; and calibrating the offset of the operational amplifier when the thermocouples are connected in the directions opposing to each other so that thermoelectromotive force of each of the thermocouples is cancelled out by the other.

The two pairs of thermocouples may be completely independent from each other, but is it preferable to make one of the conductors, included in each of the thermocouples, sharable. Especially if the two conductors are made of a semiconductor and a metal, it is better to share the semiconductor one, which is high in resistivity, and is desirable to reduce the resistance by increasing a cross-sectional area thereof.

A current detection type thermocouple as set forth in claim 10 of the present invention includes a heating unit provided on a same substrate where the current detection type thermocouple is provided. It enables easy calibration of the current detection type thermocouple itself, and of an offset of the operational amplifier caused by, for example, a temperature drift. Moreover, the current detection type thermocouple that is reduced in size, can be provided.

A current detection type thermocouple as set forth in claim 11 of the present invention is a current detection type thermocouple that detects a temperature difference using a short-circuit current flowing therethrough, wherein a junction, functioning as one end of the thermocouple, is formed on a thin film that is thermally separated from a substrate; the other end of the thermocouple is formed on the substrate; a conductor, included in the thermocouple, has a low resistivity of $5 \times 10^{-2}\ \Omega\cdot cm$ or below; two conductors included in the thermocouple have a sandwich-like structure with an insulating film interposed; and the thin film provided with the junction is supported by a plurality of beams of the sandwich-like structure.

Advantageously, a highly precise current detection type thermocouple can be provided, because the internal resistance or the absolute thermoelectric power, which differs in every production, can be calibrated. Because the thin film, having the junctions of the thermocouple, is supported by a plurality of beams, the internal resistances of the thermocouples are connected in parallel, thus, reducing the internal resistance. Therefore, a greater amount of current flows through the thermocouple with respect to the same temperature difference, and this improves the S/N. Furthermore, the two types of the conductors provided in the thermocouple have a sandwich-like structure with an insulating film interposed. Therefore, a highly sensitive and extremely compact temperature sensor can be provided.

A current detection type thermocouple as set forth in claim 12 of the present invention is a current detection type thermocouple that detects a temperature difference using a short-circuit current flowing therethrough, wherein an output of each of a plurality of thermocouples is taken out independently using a switch that is serially connected to each of the thermocouples; these thermocouples are connected to an inverting input terminal of an operational amplifier; and an imaginary short in the operational amplifier is made available so as to measure the short-circuit current flowing through the thermocouples.

For the switch serially connected to the thermocouples, an analog switch using a field effect transistor (FET) or the like, or a mechanical switch, such as a microelectromechanical systems (MEMS)-type contact switch, may be used. It is preferable to use a switch whose ON resistance is as low as possible, because the switch is serially connected to the thermocouples. To use in an infrared image sensor, for example, the thermocouples may be arranged in each pixel one dimensionally or two dimensionally. If an analog switch, such as an FET, is especially provided on the semiconductor substrate on which the current detection type thermocouple is formed, the sensor can have less pressure withstandability. Therefore, in comparison with a generally-available analog switch, a switch with an extremely small ON resistance can be designed and manufactured.

A current detection type thermocouple as set forth in claim 13 of the present invention is an equivalent current detection type thermocouple, wherein a pair of thermocouples or a plurality of pairs of thermocouples, serially connected to each other, are connected to a non-inverting input terminal of an operational amplifier; a resistor r is connected to an inverting input terminal of the operational amplifier; an open-circuit thermoelectromotive force Vs based on a measured temperature difference $\Delta$Ts of the thermocouples is directly applied to the resistor r using an imaginary short in the operational amplifier, and a short-circuit current Is flows thereto based on the open-circuit thermoelectromotive force Vs; the short-circuit current Is is obtained by dividing the open-circuit thermoelectromotive force Vs by the resistor r that is an equivalent internal resistance rs; the short-circuit current Is is also caused to flow into an feedback resistor Rf connected between the inverting input terminal of the operational amplifier and an output terminal thereof; and the measured temperature difference $\Delta$Ts is calculated from an output voltage at the operational amplifier based on the foregoing.

Based on the open-circuit thermoelectromotive force Vs at this thermocouple, the measured temperature difference $\Delta$Ts can be calculated by using the calibration data based on the open-circuit thermoelectromotive force Vr and the temperature difference of the separately-arranged calibrating thermocouple, and the internal resistance of the system including the detecting thermocouple. It is preferable to manufacture the calibrating thermocouple using the same material, including the density level of impurity, as the thermocouple (detecting thermocouple).

Details will be now described. It is preferable for the current detection type thermocouple to keep the actual internal resistance $r_{s0}$ of the thermocouple as low as possible. Because the actual internal resistance $r_{s0}$ varies depending on production, it is necessary to measure the actual internal resistance $r_{s0}$ before an actual use. However, in the circuit configuration of the current detection type thermocouple according to claim 13 of the present invention, the thermocouples (thermopile) are connected to the non-inverting input terminal of the operational amplifier. Therefore, no current flows thereto, and the non-inverting terminal is applied with an electrical potential corresponding to the open-circuit thermoelectromotive force Vs based on the measured temperature difference $\Delta$Ts of the thermocouples (also including a thermopile). Therefore, the circuit is configured so that the open-circuit thermoelectromotive force Vs, based on the temperature difference $\Delta$Ts of the thermocouples, flows directly to the resistor r, because of an imaginary short of the operational amplifier, with the resistor r being connected to the inverting input terminal of the operational amplifier. At this time, the short-circuit current Is that is the open-circuit thermoelectromotive force Vs divided by the resistor r, flows into the resistor r. Therefore, the resistor r can be considered to be equivalent to an internal resistance rs of the thermocouples. In other words, the resistor r acts as the equivalent internal resistance rs of the thermocouples. With the feedback resistor Rf connected between the inverting input terminal of the operational amplifier and the output terminal thereof, the current Is also flows into the feedback resistor Rf. Therefore, at the output of the operational amplifier, an output voltage component appears to be in proportional to the open-circuit thermoelectromotive force Vs based on the measured temperature difference $\Delta$Ts, thus enabling the calculation of the measured temperature difference $\Delta$Ts. The measured temperature difference $\Delta$Ts is estimated from the open-circuit thermoelectromotive force Vs of the prearranged thermocouple, or the calibration data based on the open-circuit thermoelectromotive force Vr and the temperature difference of the separately-prepared calibrating thermocouple.

From the above, by connecting the desired small resistor r to the inverting input terminal of the operational amplifier, the actual internal resistance $r_{s0}$ of the thermocouple can be handled as the relatively small equivalent internal resistance rs, using the resistor r, thus allowing to be reduced to an desired low level. Because the short-circuit current Is that is the open-circuit thermoelectromotive force Vs of the thermocouple divided by the resistor r, flows through the resistor r, which is the equivalent internal resistance rs of the thermocouple, the short-circuit current Is does not depend on the actual internal resistance $r_{s0}$ of the thermocouple, but on the resistor r, and becomes a value proportional to the open-circuit thermoelectromotive force Vs in the thermocouple. However, if the input terminals of the operational amplifier are short-circuited with an extremely small resistance, or a circuit equivalent to the foregoing is created, the operational amplifier stops operating. Therefore, there is a limitation in the level to which the resistor r can be reduced.

The thermocouple connected to the non-inverting input terminal of the operational amplifier may be provided in a pair, or may be a thermopile in which a plurality of the thermocouples are connected in serial, as required. However, if the thermopile is used, the internal resistance generally becomes high, thus creating a signal source with a high internal resistance, reducing the S/N. Especially, this is a problem if the thermopile with a high internal resistance is connected to the operational amplifier using a long lead. Therefore, it is preferable to keep the internal resistance as low as possible.

In the current detection type thermocouple as set forth in claim 14 of the present invention, according to the current detection type thermocouple of claim 13, the resistor r has a resistance smaller than an actual internal resistance $r_{s0}$ of the thermocouples. By reducing the resistor r, a greater amount of the short-circuit current Is flows to the resistor r by a thermoelectromotive force generated in the same thermocouple. Therefore, a current detection type thermocouple with a higher sensitivity can be provided. However, if the internal resistance is too low in the operational amplifier, the operational amplifier could be saturated with a very low signal between the input terminals thereof, preventing proper functioning of the operational amplifier. Therefore, one should be careful in that the resistor r cannot be reduced to an extremely low level.

In the current detection type thermocouple as set forth in claim 15 of the present invention, according to the current detection type thermocouple of claim 13 or 14, the thermocouples are provided in a plurality; and an output from each of the thermocouples is taken out independently using a switch that is serially connected to each of the thermocouples.

To enable the output of each of the thermocouples to be taken out independently using a single operational amplifier, the thermocouples may be connected via switches, and switched to connect to the operational amplifier. However, if an analog switch is used as a switch, the ON resistance of the switch will be generally approximately 5 ohms. If the switch is connected serially to the thermocouples, this high ON resistance can appear to be a high internal resistance of the thermocouples, limiting the short-circuit current in the current detection type thermocouples by this high ON resistance of the switch. Moreover, the reproducibility of the ON resistance, when the switch is turned ON and OFF, might not be ignorable.

In response to the above, in the current detection type thermocouple according to claim 15 of the present invention, to connect a fixed resistor r to the inverting input terminal of the operational amplifier, and to connect the thermocouples to the non-inverting input terminal of the operational amplifier, according to claim 13, a switch connected serially to each of the thermocouples is used. If each of the thermocouples is connected to the non-inverting input terminal of the operational amplifier in this manner, no current (extremely low and ignorable current) flows into each of the thermocouples, making the voltage drop ignorable. In other words, even if a switch with a relatively high resistance, such as an analog switch, is connected serially to each of the thermocouples, the voltage drop can be ignored. Therefore, regardless of the internal resistance of the switch, the open-circuit thermoelectromotive force Vs, generated at the thermocouples by the imaginary short of the operational amplifier, is directly applied to the resistor r connected to the inverting input terminal of the operational amplifier. In this manner, a desired thermocouple can be selected by turning ON and OFF the switches, regardless of the internal resistance of the switch. This allows a given thermocouple to be selected from the thermocouples connected in a matrix- or array-like form using the switch, each connected to each of the thermocouples. This is suitable for an application such as an uncooled image sensor. For this application, an infrared absorbing film is formed on the hot junctions of the thermocouples, and the thermocouples are provided in a matrix-like arrangement. When the switch is turned OFF, the resistance becomes extremely high, causing the operational amplifier to become unstable. Therefore, it is preferable to switch to a low resistance at the same time the switch is turned OFF.

In a current detection type thermocouple as set forth in claim 16 of the present invention, a pair of the current detection type thermocouples, detecting a temperature difference by detecting a short-circuit current flowing therethrough using an imaginary short in an operating circuit, is used as a single unit; the unit is provided in a plurality; and an output from each of the units is taken out independently using a switch that is serially connected to each of the units. The output terminal of the single unit is the same as the output terminal of the operational amplifier (OP Amp) included in the unit.

At this time, an OP amplifier is required for each unit, thus making it difficult to arrange a number of units. However, this arrangement is extremely effective with a small number. An analog switch, or an MEMS-type mechanical contact switch, may be used for the switch.

A plurality of units may be connected to the input end of a separately-provided operational amplifier via switches. In this arrangement, the output terminal of each of the units, in place of the thermocouples according to claim 12, may be connected to the inverting input terminal of the separately-provided operational amplifier. Alternatively, the output terminal of each of the units may be connected to the non-inverting input terminal of the operational amplifier, in the same manner as the thermocouples according to claim 13.

In the current detection type thermocouple as set forth in claim 17 of the present invention, according to the current detection type thermocouples of claims 12 to 16, a junction of the thermocouple is formed on a thin film that is thermally separated from a substrate. It is preferable to form one junction of the thermocouple on a thin film that is thermally separated from the substrate to use as a hot junction, and to form the other end of the thermocouple on the substrate to use as a cold junction. Because the thin film that is thermally separated from the substrate, has low thermal capacity and heat conductance, a large temperature change can be obtained with a small amount of heat, thus achieving a highly sensitive high-speed sensor. An infrared absorbing film may be formed on the thermally-separated thin film, to use as a thermal infrared sensor. Moreover, the sensor can be used for detecting the flow of heated gas or fluid, or for obtaining various physical quantities based on a heat dissipation variation caused by a change in heat conductivity of gas or fluid.

In the current detection type thermocouple as set forth in claim 18 of the present invention, according to any one of claims 11 or 17, the thermocouple is provided with two types of conductors; these conductors are guided to the substrate via a plurality of beams supporting the thin film; the conductors having a low resistivity of 5 × 10$^{-2}$ Ω·cm or below on the substrate are configured together to form two terminals.

Details will be now described. To use a thin film thermally separated from the substrate (floating in midair) as a light-receiving unit of thermal infrared sensor, it is often desired to increase the area thereof to improve the S/N. It is advantageous to use a plurality of beams to support the thin film on the substrate, because a stronger structure can be achieved. However, considering the heat that escapes from the thin film floating in midair, which is the light-receiving unit to the substrate, it is preferable to support the film with a plurality of thin beams. However, because each of the beams is long and thin, the electrical resistance thereof cannot help being high. The present invention provides a structure that the resistances of each of the beams are connected in parallel, and beams are provided together to form two terminals on the substrate, using a conductor of low electrical resistance.

In a current detection type thermocouple as set forth in claim 19 of the present invention, at least a pair of thermocouples are provided to each of a plurality of cantilevers made from a thin film provided on a substrate; the thermocouples, formed on each of the cantilevers, are connected together in parallel to form two terminals; and a temperature difference is measured by detecting a short-circuit current flowing through the thermocouples between the two terminals, using an imaginary short in an operational amplifier.

If a thin film cantilever, provided with the thermocouple, is used as a light-receiving unit of a thermal infrared sensor, the thermal time constant greatly depends on the size of the cantilever. The area of the thin film cantilever, which is the light-receiving unit, must be reduced in a high-speed thermal infrared sensor. However, it is often desired to increase the area of the light-receiving unit. The present invention is invented especially to achieve this objective. For example, thin film cantilever-type infrared light-receiving units, extremely small in size, are arranged in two-dimensional array, and connected to each other in parallel to increase the light-receiving area equivalently. At the same time, the sensor can be operated at high speed, because the thermal time constant depends on the size of each of the cantilevers. This sensor is especially effective in receiving an electromagnetic wave with a long wavelength, such as a terahertz wave, or in receiving an infrared with a long wavelength. It is possible to bring the thermal time constant down to approximately 1 microsecond by adjusting the length of the cantilever to approximately 5 micrometers, while the thermal time constant still depends on the thickness thereof.

In the current detection type thermocouple as set forth in claim 20 of the present invention, according to any one of claims 11 and 17 to 19, an absolute temperature sensor is provided to the substrate supporting the thin film, on which the thermocouple is formed, to enable measurement of a temperature at the substrate. Because the current detection type thermocouple can only measure a temperature difference, it is often necessary to measure an absolute temperature of the substrate to use as a reference.

For the absolute temperature sensor, a known absolute temperature sensor, such as a thermistor, a platinum resistance body, a diode thermistor or a transistor thermistor using the pn-coupling, may be used. It is more advantageous to use the absolute temperature sensor that can be implemented on the same substrate using a matured photofabrication technology, such a diode thermistor or a transistor thermistor.

A thermal infrared sensor as set forth in claim 21 of the present invention uses the current detection type thermocouple according to any one of claims 10 to 20, wherein an infrared absorbing film is provided at least near a junction of the thermocouple. If the light-receiving unit, on which the infrared absorbing film is formed, is formed on a thin film that is thermally separated from the substrate, the heat capacity and the heat conductance can be reduced, thus a highly sensitive and highly responsive thermal infrared sensor can be achieved.

In the thermal infrared sensor according to claim 22 of the present invention, according to the thermal infrared sensor of claim 21, at least a part of a peripheral circuit of the infrared sensor is arranged on an area of the substrate located below the thin film that is thermally separated from the substrate, on which the junction of the thermocouple is formed. Especially in an uncooled image sensor, for example, having a structure that each of the thermocouples is formed on a thin film and is arranged in a matrix, a part of the peripheral circuit, including the integrated circuit having the switch (e.g., the analog switch) for selecting a specific thermocouple, needs to be connected to each of the thermocouples. If the integrated circuit, which is a part of the peripheral circuit of the thermal infrared sensor, is formed below the thin film infrared light-receiving unit, where the junctions of the thermocouples are formed, the light-receiving unit can occupy a larger area with respect to the area of the sensor chip itself, advantageously improving the S/N.

In applying to an uncooled image sensor, for example, the thin film infrared light-receiving units, as pixels, need to be arranged in a two-dimensional array. To increase the area occupied by the thin film light-receiving units making up the pixels with respect to the entire area occupied by the arrayed light-receiving units, it is preferable to form a supporting unit, such as the beams supporting the thin film light-receiving units on the substrate, having a high thermal resistance between the thin film light-receiving units and the substrate. In other words, it is preferable to provide a structure that the supporting unit is placed behind the thin film light-receiving unit with respect to a direction of an infrared irradiation.

The infrared detecting unit as set forth in claim 23 of the present invention includes at least a thermal infrared sensor, an operational circuit section, and a display section, so that various operation results, such as an absolute amount of an infrared through the filter or a temperature of a target, can be displayed based on the output from the thermal infrared sensor according to claim 21 or 22.

EFFECT OF THE INVENTION

In the method for calibrating a current detection type thermocouple according to an aspect of the present invention, a calibrating thermocouple is provided, and a large temperature difference $\Delta Tr$ can be generated to the calibrating thermocouple using a heating unit. Therefore, an absolute thermoelectric power $E_{ro}$ of the calibrating thermocouple can be obtained easily. Because the detecting thermocouple can be manufactured in the same conditions as the calibrating thermocouple, the detecting thermocouple can be calibrated easily at a high precision.

In the method for calibrating a current detection type thermocouple according to another aspect of the present invention, the calibrating thermocouple and the detecting thermocouple can be formed as thin film thermocouples on the same substrate, and can be arranged near to each other. Therefore, the calibration precision can be advantageously improved.

In the method for calibrating a current detection type thermocouple according to still another aspect of the present invention, a heater using Joule heat is used as the heating unit to heat a part of the substrate and to generate the temperature difference $\Delta Tr$. Therefore, an easy-to-use calibration method can be provided.

In the method for calibrating a current detection type thermocouple according to still another aspect of the present invention, a temperature difference $\Delta Tr$ between two junctions (a hot junction and a cold junction) of the calibrating thermocouple is measured with a pair of temperature sensors provided on the same substrate where the calibrating thermocouple is provided. Therefore, a highly precise calibration can be advantageously performed easily.

In the method for calibrating a current detection type thermocouple according to still another aspect of the present invention, a semiconductor, added with an impurity in a density high enough to degenerate so as to be reduced in a resistance, is used as one of conductors provided to the thermocouple. If this arrangement is used, the thermoelectromotive force generally becomes lower than that in a semiconductor with a high resistance. While the thermoelectromotive force is just a fraction, the resistance can be reduced, for example, by four digits. Therefore, a highly sensitive temperature sensor can be provided. In addition, the semiconductor with a reduced resistance generally has a larger internal resistance than that of a metal. Because a metal wire has a low resistance, it is possible to handle the internal resistance of the thermocouple as a fraction of the reduced resistance of the semiconductor (10 ohms at most). Therefore, because this fraction of the resistance is low, even if the metal wire is used, the resistance of the wires can be advantageously ignored in calibration. Furthermore, upon detecting a current variation using the operational amplifier (OP Amp), an input resistance to the operational amplifier cannot be brought down too low. From this view point, it is also advantageous to use the semiconductor with the resistance thereof reduced.

In the method for calibrating a current detection type thermocouple according to still another aspect of the present invention, the calibration can be performed easily, even if one of the junctions (for example, the hot junction) is formed on a cantilever, a micro-air-bridge, or a diaphragm that is a thin film thermally separated from the substrate (for example, a thin film floating in midair).

In a method for calibrating an offset of an operational amplifier used for detecting a short-circuit current in the current detection type thermocouple according to still another aspect of the present invention, an variation in the offset of the operational amplifier, caused by an temperature drift, can be corrected, and further calibrated, even if the short-circuit current in the current detection type thermocouple is extremely small, for example by using a known temperature increase generated by the heating unit of a micro heater (or, alternatively the current detection type thermocouple itself being used as a heater); by forming another thermocouple equivalent to the current detection type thermocouple and causing the equivalent current detection type thermocouple to perform an differential operation; and by using a resistance that is equivalent to the internal resistance of the current detection type thermocouple. Therefore, a highly precise temperature difference detecting sensor can be provided.

In a current detection type thermocouple according to still another aspect of the present invention, a detecting thermocouple, a calibrating thermocouple, and a pair of temperature sensors for detecting a temperature difference of the calibrating thermocouple, as well as a heater, can be provided on the same substrate. Therefore, the difference in the internal resistance caused by form-effect of the current detection type thermocouple can be corrected and calibrated. Thus, a highly reliable, highly sensitive, and highly precise temperature sensor can be provided. Furthermore, a mass production using the MEMS technology becomes available, and a further application to a small-sized, low-cost, highly sensitive, and highly precise thermal infrared sensor can be expected.

In a current detection type thermocouple according to still another aspect of the present invention, a switch is serially connected to each of a plurality of the thermocouples, and the thermocouples are connected to an inverting input terminal of an operational amplifier using the switch. By utilizing an imaginary short in the operational amplifier, the output from each of the thermocouples can be taken out independently. Therefore, a highly sensitive infrared sensor, which is a sensor array, can be advantageously provided.

In a current detection type thermocouple according to still another aspect of the present invention, a circuit can be configured to connect the thermocouples (including a thermopile) to the non-inverting input terminal of the operational amplifier. When the resistor r is connected to inverting input terminal, the resistor r can be considered as an internal resistance rs equivalent to that in thermocouple because of the imaginary short in the operational amplifier. Therefore, by selecting a low resistance, the resistor r of approximately of 10 ohms, this low resistor r will become an equivalent internal resistance rs of the thermocouple. Therefore, even if the actual internal resistance $r_{s0}$ of the thermocouple is high, the internal resistance can be handled as the desirable equivalent low internal resistance rs. Thus, a highly sensitive current detection type thermocouple can be advantageously provided.

In an current detection type thermocouple according to still another aspect of the present invention, a circuit connecting a switch, connected serially to the thermocouples, to the inverting input terminal of the operational amplifier is used as a unit, and this unit is provided in a plurality, allowing the output of each of the units to be taken out independently. Based on these outputs, the current flowing through each of the thermocouples can be taken out as an output voltage, using the imaginary short of in a separately-provided operational amplifier. Therefore, a temperature difference can be advantageously detected at high precision, for example, in a sensor array.

In an current detection type thermocouple according to still another aspect of the present invention, a plurality of small cantilevers, provided with the thermocouple, may be arranged in a two-dimensional array so as to be equivalently used as an infrared light-receiving unit having a large area. Because these thermocouples are connected in parallel to increase the current, and each of the light-receiving units are small in size, a highly responsive thermal infrared sensor can be provided. Because of the two dimensional array arrangement, a highly responsive thermal infrared sensor having an large infrared light-receiving unit can be advantageously provided.

Because the junction of the current detection type thermocouple according to still another aspect of the present invention can be formed on a thin film that is thermally separated from the substrate, the thermal capacity and the heat conductance can be reduced, thus enabling the temperature to be increased greatly with a small amount of heat. Therefore, a highly sensitive high-speed current detection type thermocouple can be provided.

With the current detection type thermocouple according to still another aspect of the present invention, the heat amount generated by the heater, or a temperature change caused by a flow of gas or fluid, can be measured sensitively at high speed. Therefore, various highly sensitive and responsive thermal sensors can be provided, such as a flow sensor for gas or fluid, or a vacuum sensor that measures the heat radiation caused by ambient gas, or sensors for analyzing gas or fluid components, or for detecting exothermal reaction or an infrared or a radioactive ray.

BRIEF DESCRIPTION OF DRAWINGS

[Fig. 1] Fig. 1 is a schematic perspective view of an example of a sensor chip provided onto a current detection type thermocouple, explaining the current detection type thermocouple and a calibration method thereof according to an embodiment of the present invention (First Embodiment).
[Fig. 2] Fig. 2 is a schematic cross-sectional view across a detecting thermocouple 20 shown in Fig. 1 (First Embodiment).
[Fig. 3] Fig. 3 is a diagram of an example of a measuring circuit provided in the current detection type thermocouple according to the embodiment of the present invention (First Embodiment).
[Fig. 4] Fig. 4 is a diagram of another example of the measuring circuit provided in the current detection type thermocouple according to the embodiment of the present invention (First Embodiment).
[Fig. 5] Fig. 5 is a schematic perspective view of another example of a sensor chip provided with a current detection type thermocouple, explaining the current detection type thermocouple and a calibration method thereof according to an embodiment of the present invention (Second Embodiment).
[Fig. 6] Fig. 6 is a schematic plan view of an example of a sensor chip, where the current detection type thermocouple according to an embodiment of the present invention is implemented as a thermal infrared sensor (Fourth Embodiment).
[Fig. 7] Fig. 7 is a schematic cross-sectional view across a line A-A shown in Fig. 6 (Fourth Embodiment).
[Fig. 8] Fig. 8 is a diagram of an example of the current detection type thermocouple according to an embodiment of the present invention used as a high speed thermal infrared sensor with a large light-receiving area (Fifth Embodiment). [Fig. 9] Fig. 9 is a schematic circuit diagram of an example of the current detection type thermocouple according to an embodiment of the present invention (Sixth Embodiment).
[Fig. 10] Fig. 10 is a circuit diagram of an example of an equivalent current detection type thermocouple according to an embodiment of the present invention applied to a thermal infrared sensor (Seventh Embodiment).

[Fig. 11] Fig. 11 is a circuit diagram of another example of an equivalent current detection type thermocouple according to an embodiment of the present invention applied to a thermal infrared sensor (Eighth Embodiment).

[Fig. 12] Fig. 12 is a circuit diagram of an example of an equivalent current detection type thermocouple according to an embodiment of the present invention applied to a thermal infrared sensor (Ninth Embodiment).

[Fig. 13] Fig. 13 is a schematic diagram of a unit that combines a thermocouple 120 and an operational amplifier (OP Amp) (Tenth Embodiment).

[Fig. 14] Fig. 14 is a schematic cross-sectional view of an example of the current detection type thermocouple according to an embodiment of the present invention applied to a thermal infrared sensor (Eleventh Embodiment).

[Fig. 15] Fig. 15 is a schematic plan view of an example of the sensor chip provided with a current detection type thermocouple and a schematic diagram of the circuit, explaining a method for calibrating an offset of the operational amplifier used for detecting a short-circuit current in the current detection type thermocouple according to an embodiment of the present invention (Twelfth Embodiment)

[Fig. 16] Fig. 16 is a schematic plan view of another example of the sensor chip, explaining the method for calibrating the offset of the operational amplifier used for detecting the short-circuit current in the current detection type thermocouple according to an embodiment of the present invention (Thirteenth Embodiment).

[Fig. 17] Fig. 17 is a schematic circuit diagram of still another example of the method for calibrating the offset of the operational amplifier used for detecting the short-circuit current in the current detection type thermocouple according to an embodiment of the present invention (Fourteenth Embodiment).

[Fig. 18] Fig. 18 is a block diagram of an example of an infrared detecting apparatus using the current detection type thermocouple according to an embodiment of the present invention (Fifteenth Embodiment).

EXPLANATIONS OF LETTERS OR NUMERALS

1 Sensor chip
5 Thin film
10 Substrate
11 SOI layer
12 BOX layer
15 Base substrate

16 Cantilever supporting unit
20 Detecting thermocouple
20R Reference thermocouple
20A, 20B, 20R Conductor
21 Calibrating thermocouple
21A, 21B Conductor
22 N-type diffusing area
25 Junction
26 Hot junction
27 Cold junction
30 Cantilever
31 Beams
40 Cavity
41 Groove
50, 51, 51, 52 Insulating thin film
55 Sacrifice layer
60, 60A, 60B Electrode
61 Alloy layer
62 Ohmic contact
70, 70A, 70B, 70R Electrode pad
80, 80A, 80B Electrode pad
90, 90A, 90B Electrode pad
100 Absolute temperature sensor
101, 102 Temperature sensors
105 Pn-coupled diode
110 Wiring
111 Vertical wires
112 Horizontal wires
115A, 115B Terminals
120 Thermocouple
120A, 120B Conductor
130 Cantilever array
150 Heater
170 Resistance
200 Infrared absorbing film
210 Light-receiving unit
300 Integrated circuit
310 Switch

BEST MODE(S) FOR CARRYING OUT THE INVENTION

Examples of a method for calibrating a current detection type thermocouple and the like, the current detection type thermocouple, a thermal infrared sensor, and an infrared detecting apparatus will be now explained in detail, with reference to drawings, according to embodiments of the present invention. In these embodiments, the current detection type thermocouple is a cantilever or a micro-air-bridge type, which has a thin film structure that are thermally separated from a substrate.

First Embodiment

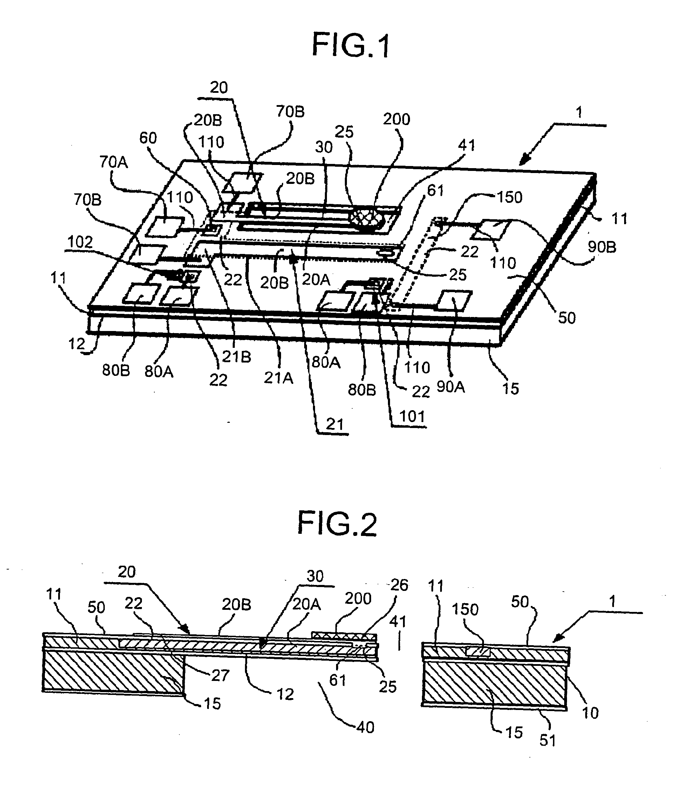

Fig. 1 is a schematic perspective view of an example of a sensor chip 1 provided onto a current detection type thermocouple, explaining the current detection type thermocouple and a calibration method thereof according to an embodiment of the present invention. In this embodiment, the sensor chip 1 is implemented as a thermal infrared sensor using a detecting thermocouple 20. The sensor chip 1 is provided onto a calibrating thermocouple 21, a pair of calibrating temperature sensors 101, 102, and a self-heating heater 150. In this embodiment, a substrate 10 (SOI substrate) having a p-type SOI layer 11 is used to form an n-type diffusing area 22, by adding a n-type impurity, such as phosphorus, onto the SOI layer 11 in a high density just enough to degenerate. This n-type diffusing area 22 is used as one of conductors, a conductor 20A, of the detecting thermocouple 20 and the calibrating thermocouple 21. The other conductor 20B is made of nickel (Ni), for example, and the detecting thermocouple 20 is formed as a thin-film cantilever 30 using the SOI layer 11 as a main body. In this embodiment, positive and negative charges are respectively accumulated on the degenerated n-type semiconductor thin film that makes up a conductor 21A, one of the conductors of the thermocouple, and on the Ni that makes up the other conductor 21B, at a hot junction 26. In addition, these conductors are made from simple materials. Furthermore, the degenerated n-type semiconductor thin film has a large thermoelectromotive force, in spite of its small electrical resistance. Therefore, the degenerated n-type semiconductor thin film and Ni are used as the materials for the thermocouple, allowing the thermoelectromotive force of each material to be added to each other and become increased. Fig. 2 is a schematic cross-sectional view across the detecting thermocouple 20 shown in Fig. 1.

The detecting thermocouple 20 in the current detection type thermocouple according to the embodiment of the present invention is implemented and manufactured as a thermal infrared sensor in the manner described below. The thin p-type SOI layer 11 (for example, with a thickness of 2 micrometers) of the SOI substrate is left as a long thin cantilever, and a cavity 40 is provided below the cantilever using MEMS technology. The phosphorus impurity is then added onto this cantilever 30 by thermal diffusion in a high density, approximately of $10^{21}$cm$^{-3}$, to form the n-type diffusing area 22 of the degenerated n-type semiconductor. A nickel (Ni) thin film that is the conductor 20B, on which the hot junction 26 accumulates negative charge, is formed thereon, with an interposed insulating thin film 50 that is a thin SiO$_2$ film. In this manner, the n-type semiconductor thin film in which Si is degenerated and the Ni thin film are respectively used as the conductors 20A, 20B of the thermocouple, and make up the main materials of the cantilever 30. On the SiO$_2$ film that is a BOX layer 12 of the SOI substrate being the substrate 10, it is rather preferable to once remove an area corresponding to the cavity 40 that is provided below the thin film cantilever 30, by etching, and again to form a thin SiO$_2$ film as a protection film, from the view point to minimize heat conduction and heat capacity as much as possible. A junction 25 that is the hot junction 26 of the thermocouple (detecting thermocouple 20 or the calibrating thermocouple 21), is formed near one tip of the cantilever 30. A cold junction 27 that is at the other end of the thermocouple, uses an electrode 60 made of aluminum (Al) formed on the Si substrate 10 (also acting as a heat sink), and a wiring 110. A part of a peripheral circuit, such as an operational amplifier, may preferably be formed on the substrate 10 as required, to be operated for signal processing, amplification, or driven as a temperature sensor.

Because the sensor chip 1 is implemented as a thermal infrared sensor, an infrared absorbing film 200 that absorbs the infrared is formed as a infrared light-receiving unit 210 in a form of a thin film, in an area covering the junction 25 corresponding to the hot junction 26, located near the tip of the thin-film cantilever 30, of the detecting thermocouple 20.

Although not shown, a cantilever or a cross-linking structure, or array-like diaphragm, having the infrared absorbing film 200 as the infrared light-receiving unit 210 near the hot junction 26 of the detecting thermocouple 20, may be used respectively as a pixel of an image sensor.

The calibrating thermocouple 21 of the current detection type thermocouple according to the embodiment of the present invention is manufactured in a manner explained below. Onto the thin SOI layer, having the same SOI as the detecting thermocouple 20, of the substrate 10, the phosphorus impurity is added by thermal diffusion in a high density of approximately $10^{21}$cm$^{-3}$ to form a degenerated n-type semiconductor, and a nickel (Ni) thin filmed is formed thereon, having the same or a little longer size than that of the detecting thermocouple 20 and following the same manufacturing process as that of the detecting thermocouple 20. However, the calibrating thermocouple 21 should not be formed into a shape of a cantilever as the detecting thermocouple 20. In other words, it is preferable to form a base substrate 15 directly onto the SOI substrate, without creating a cavity.

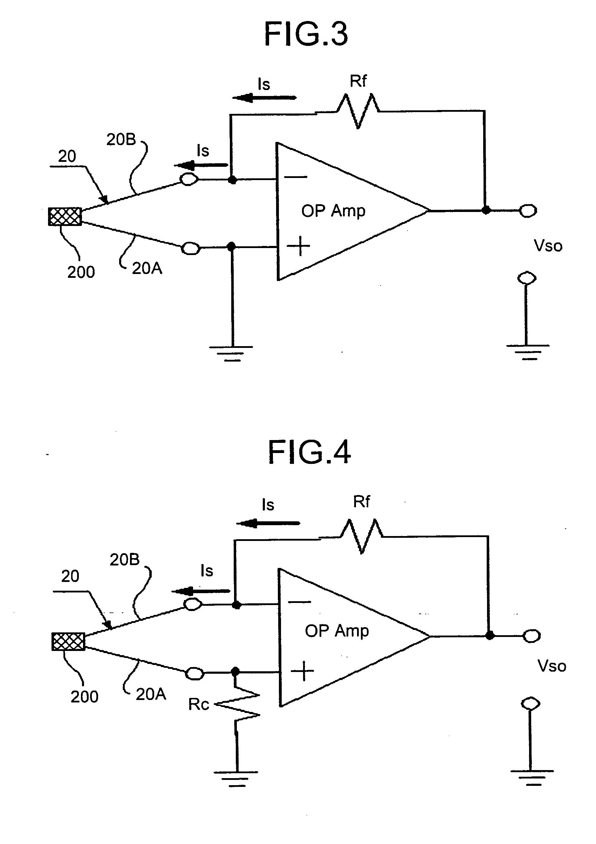

In Fig. 1, each of the temperature sensors 101, 102, provided for calibrating the current detection type thermocouples according to the embodiment of the present invention, is shown to be a diode thermistor using a pn-coupled diode. A method for calibrating the detecting thermocouple 20, using a pair of the temperature sensors 101, 102, the calibrating thermocouple 21, and the self-heating heater 150, will be now explained. To use the pn-coupled diode as a diode thermistor, a temperature dependency of a forward current If is measured at first for the pn-coupled diodes, each corresponding to each of the temperature sensors 101, 102, with a forward voltage of 0.60V, for example (here, If shows an exponential dependency to an inverse 1/T of an absolute temperature T), so that the temperatures at the temperature sensors 101, 102 can be determined by measuring the If. A current is then applied to the heater 150 through electrode pads 90A, 90B provided thereto to heat the heater 150, and a temperature difference $\Delta$Tr between the temperature sensors 101 and 102 is measured. The temperature sensors 101, 102 are provided at locations corresponding to the positions of the hot junction 26 and the cold junction 27 of the calibrating thermocouple 21, respectively, with respect to the flow of the heat from the heater 150. Therefore, an absolute thermoelectric power $E_{ro}$ of the calibrating thermocouple can be calculated from an open-circuit thermoelectromotive force Vr of the calibrating thermocouple 21, as $Vr/\Delta Tr$. At this time, the open-circuit thermoelectromotive force Vr in the calibrating thermocouple 21 can be measured with a small amount of error if the temperature difference $\Delta Tr$ between the temperature sensors 101 and 102 is set to a large value, for example 3°C. A measured internal resistance $r_s$ of the detecting thermocouple 20 is then measured though electrode pads 70 (70A, 70B) at around the measured temperature. Because the detecting thermocouple 20 is manufactured at the same time as the calibrating thermocouple 21, they are considered to have the same absolute thermoelectric power $E_{ro}$. When a measured infrared is irradiated onto the infrared absorbing film 200, formed at the tip of the cantilever 30 as the thermal infrared sensor, a temperature at the substrate 10 raises by $\Delta Ts$ (which is a temperature difference between the hot junction 26 and the cold junction 27). Based on this measured temperature difference $\Delta Ts$, a short-circuit current Is flowing through the detecting thermocouple 20 is measured. The short-circuit current Is can be measured by taking advantage of input terminals of the operational amplifier (OP Amp) operating as an imaginary short, as shown in Fig. 3. When the short-circuit current Is flows into a feedback resistor Rf, an output voltage Vso of the operational amplifier can be observed as a product of the short-circuit current Is and the feedback resistor Rf ($Is \cdot Rf$). The short-circuit Is can be calculated, because the feedback resistor Rf is known and the output voltage Vso is observable. The measured temperature difference $\Delta Ts$, generated at the detecting thermocouple 20 upon receiving the infrared, can be obtained based on the (Formula 1). In Fig. 3, a non-inverting input terminal of the operational amplifier is shown to be directly grounded. However, if a resistor Rc is added between the ground and the non-inverting input terminal as shown in Fig. 4, the output voltage Vso can be increased, as well as an offset voltage of the OP amplifier can be easily adjusted. If the resistor Rc and the feedback resistor Rf are equal, the short-circuit current Is in the thermocouple also flows to the resistor Rc. Therefore, the output voltage Vso will be twice of that shown in Fig. 3 in which the non-inverting input terminal is directly grounded. However, enough caution must be paid because the larger the resistor Rc is, the worse the S/N will be.

Based on experiments, the absolute thermoelectric power $E_{ro}$ in the degenerated n-type diffusing area 22 as the conductor 21A formed on the SOI layer, and in the calibrating thermocouple 21 of the Ni thin film as the conductor 21B, was approximately 200 $\mu$V/K, and the internal resistance $r_s$ of the detecting thermocouple 20 was approximately 30 ohms. The output voltage Vso was approximately 80 millivolts with the feedback resistor Rf of 100 kilo-ohms. Therefore, the short-circuit Is is 80 microamperes, and the measured temperature difference $\Delta Ts$ that is the amount of temperature increased at the detecting thermocouple 20 due to infrared irradiation, can be calculated as 0.12°C, based on the Formula 2.

An electrical resistance of a metal or a semimetal is generally extremely smaller than that of the degenerated semiconductor thin film. Therefore, if the metal (for example, Ni) thin film or the semimetal is used as one of the conductors of the thermocouple as explained above, the conductor can be made thinner and slimmer than those made from the degenerated semiconductor thin film.

Second Embodiment

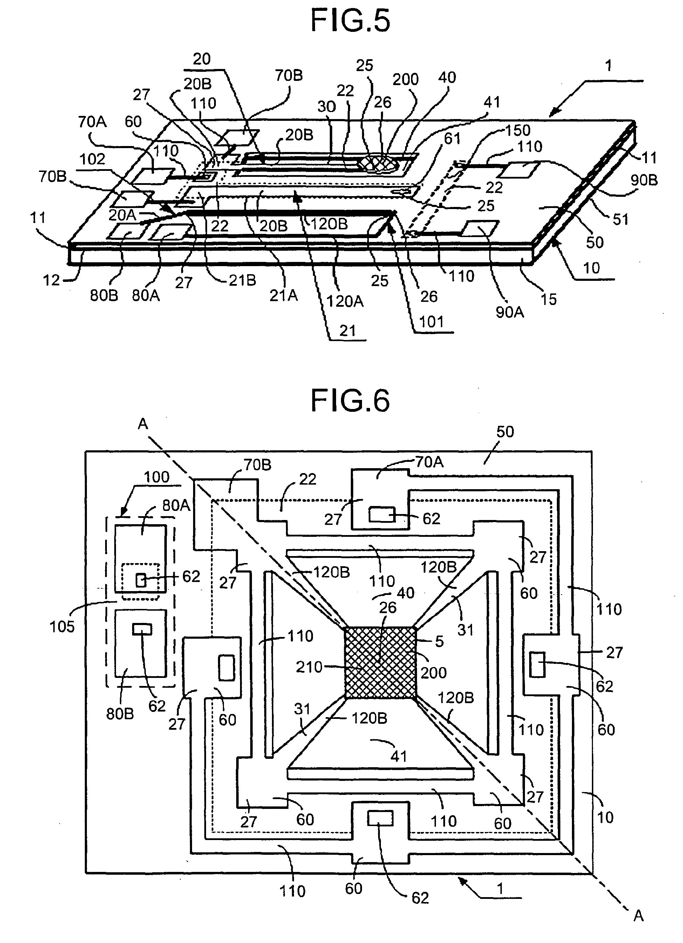

Fig. 5 is a schematic perspective view of another example of the sensor chip 1 provided with a current detection type thermocouple, explaining the current detection type thermocouple and a calibration method thereof according to an embodiment of the present invention. Fig. 5 is basically same as Fig. 1 mentioned above. However, Fig. 5 is different from Fig. 1 in that a thermocouple including different conductors 120A, 120B is used as the temperature sensor 101 for detecting the temperature difference in the calibrating thermocouple 21. This thermocouple may be manufactured, for example, using gold (Au) and nickel (Ni) for each of the conductor 120A and 120B.

Third Embodiment

In this embodiment, instead of the heater 150 formed on the substrate in the first and the second embodiments (shown in Fig. 1 and Fig. 5, respectively), the heater 150, not shown, is manufactured separately and brought near or in contact with the substrate. In this manner, the detecting thermocouple 20 is calibrated using the calibrating thermocouple 21 and a pair of the temperature sensors 101, 102 (using only the temperature sensor 101 in some situations), and following the method described above.

Fourth Embodiment

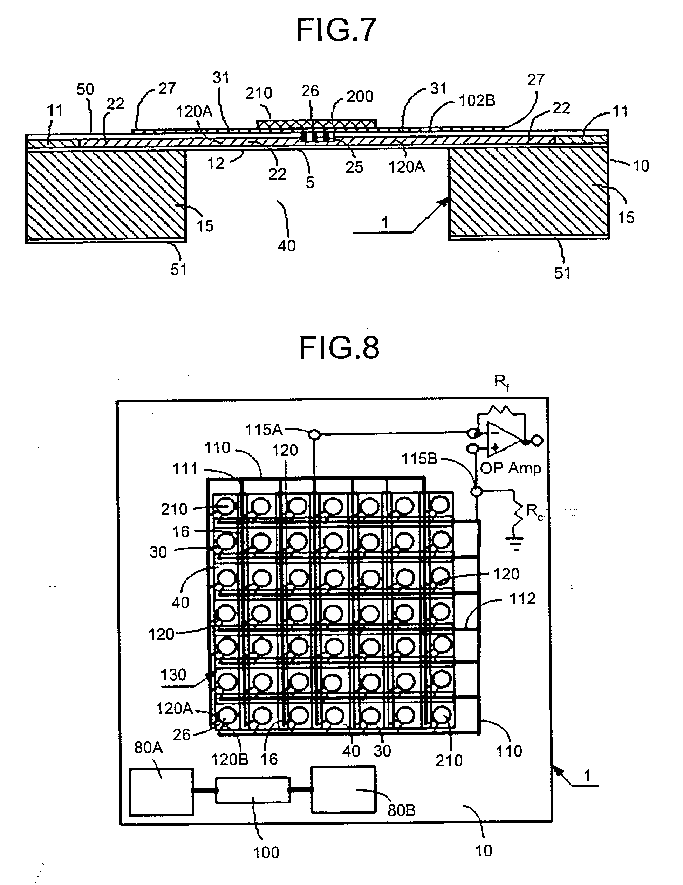

Fig. 6 is a schematic plan view of a sensor chip, where the current detection type thermocouple according to an embodiment of the present invention is implemented as a thermal infrared sensor. Fig. 7 is a schematic cross-sectional view across a line A-A shown in Fig. 6. In this thermal infrared sensor, the infrared absorbing film 200 is formed over the light-receiving unit 210 that is thermally separated from the substrate 10 by way of the cavity 40 and a groove 41, and formed on a thin film 5 supported by four beams 31. The junction 25 of the current detection type thermocouple (thermocouple 120) is provided under the infrared absorbing film 200, to provide the hot junction 26. Each of the four beams 31 provides the thermocouple 120. The impurity is added onto the p-type SOI layer 11 in enough high density to degenerate to form the n-type diffusing area 22. This area is used as the one conductor 120A of the thermocouple 120. The other conductor 120B is formed with the interposing insulating thin film 50 that is a thermally-oxidized film made of a material such as silicone (Si). In other words, the insulating thin film 50, approximately 0.3 micrometers in thickness, is sandwiched between the one conductor 120A and the other conductor 120B, directly below the four beams 31 and the light-receiving unit 210. Therefore, the thin infrared light-receiving unit 210 with a low heat capacity can be achieved with a simple structure. On the electrodes 60, which is to be the cold junctions 27 of the thermocouples 120, provided on the substrate 10, the conductors 120A and 120B of the thermocouple 120 are connected in parallel, so as to form two electrodes (electrode pads 70A, 70B) via the wiring 110 for all of the thermocouples 120. Preferably, the n-type diffusing area 22 that functions as the conductor 120A, has a resistivity that is as low as possible, at least below $5 \times 10^{-2}\ \Omega\cdot$cm, so as to minimize the resistance therein, and is made of a material having a Seebeck coefficient with a sign opposite to that of the n-type diffusing area 22. However, because it is desirable to reduce the electrical resistance, it may be better, in some cases, to use a metallic material, such as nickel (Ni), having a small electrical resistance, than the p-type semiconductor, even if the Seebeck coefficient thereof is not so high, because the p-type semiconductor will increase the electrical resistance.

In addition, in Fig. 6, a pn-coupled diode 105 is formed on the substrate 10 as an absolute temperature sensor 100 so that the temperature increase, caused upon the light-receiving unit 210 being irradiated with the infrared, can be detected.

Fifth Embodiment

Fig. 8 a diagram of an example of the current detection type thermocouple according to an embodiment of the present invention, used as a high speed thermal infrared sensor including a small, thin-film cantilever array 130 that provides a large light-receiving area. In the cantilever array 130, the extremely small cantilevers 30, each provided with the thermocouple 120, are arranged as a two-dimensional array. Each of the thermocouples 120 is connected in parallel together to form two terminals. The two types of the conductors 120A, 120B, included in the thermocouple 120, have the same sandwich-like structure with an insulating film interposed, in the same manner as the detecting thermocouple sensor 20, shown in Fig. 5, formed on the cantilever-type thin film for receiving infrared. In actuality, each of the cantilevers 30 shown in Fig. 8 has the sandwich-like structure having the insulating film interposed, but only the two types of the conductors 120A, 120B are shown, to simplify the diagram.

As described above, in the extremely small thin-film cantilever array 130, the light-receiving area is increased equivalently by arranging the cantilever-type infrared light-receiving units in a two-dimensional array, and connecting them in parallel. Moreover, because a thermal time constant depends on the size of each of the cantilevers, the cantilever array 130 can be operated at a high speed.

Each of the thermocouples 120 are connected in parallel via common vertical wires 111 and horizontal wires 112 together to form two terminals 115A, 115B. Based on the outputs from these two terminals, generated upon receiving the infrared, it is possible to detect a total sum of short-circuit currents flowing through each of the thermocouples between these two terminals, using the imaginary short in the operational amplifier, thus enabling the temperature difference to be detected. Therefore, a highly sensitive high-speed thermal infrared sensor can be realized. It is useful to form the operational amplifier (OP Amp) on the same substrate 1 where the cantilever array 130 is formed.

Sixth Embodiment

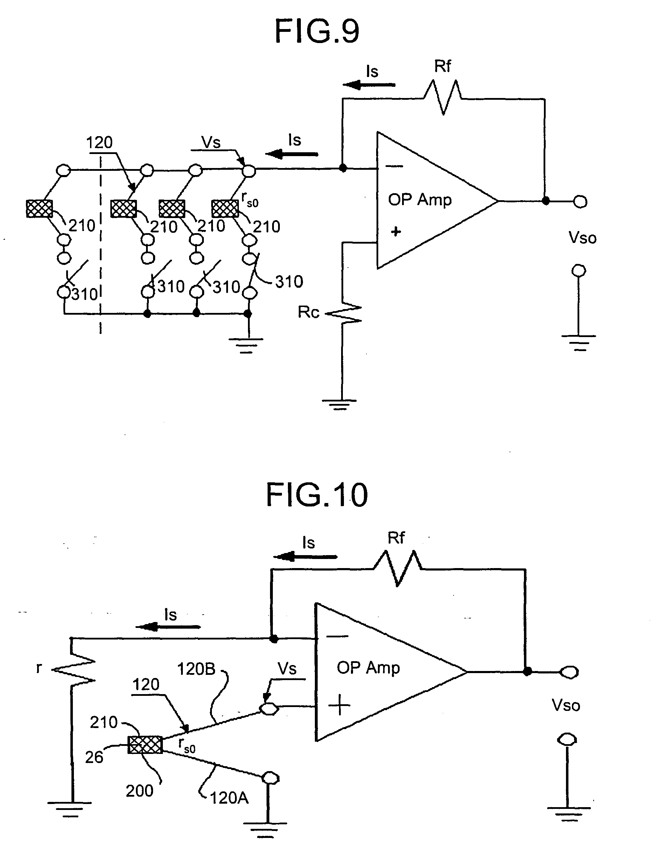

Fig. 9 is a schematic diagram of an example of the current detection type thermocouple according to an embodiment of the present invention. In this embodiment, the current detection type thermocouple is applied to a thermal infrared sensor. The thermal infrared sensor includes a plurality of the thermocouples 120, formed with the light-receiving unit 210 having the infrared absorbing film. A switch 310 is serially connected to each of the thermocouples 120. Each of the thermocouples 120 is selected by the switch 310, and connected to the inverting input terminal of the operational amplifier (indicated as OP Amp in Fig. 9). The light-receiving unit 210 is preferably provided on a thin film that is thermally separated from the substrate, such as the cantilever.

An analog switch, such as an FET, or a mechanical switch, such as an MEMS-type contact switch, may be used for the switches 310. An infrared image sensor that has, as the light-receiving unit, a matrix-like structure, by using cantilevers in combination with the switches 310, can be realized. It is also preferable to form the switches, the OP amplifiers, and the integrated circuit on the same substrate where the light-receiving unit of the infrared image sensor is provided.

Seventh Embodiment

Fig. 10 is a circuit diagram of an example of the equivalent current detection type thermocouple according to an embodiment of the present invention equivalent current detection type thermocouple applied to the thermal infrared sensor. The thermocouple 120 is connected to the non-inverting input terminal of the operational amplifier (shown as OP Amp in Fig. 10). In this arrangement, actually almost no current flows through the thermocouple 120, and the thermocouple 120 is only applied with the thermoelectromotive force. In this circuit configuration, because almost no current flows through the thermocouple 120 and the thermocouple 120 is only applied with the thermoelectromotive force, not only a pair of the thermocouples, but also serially-connected thermocouples (a thermopile) may be used.

In the seventh embodiment, the thermocouple 120 is applied to the thermal infrared sensor. The hot junction 26 of the thermocouple 120 is provided below the infrared absorbing film 200 that is to function as the light-receiving unit 210. In this circuit configuration, the short-circuit current Is flows through a resistor r. The short-circuit current Is here is obtained by dividing the open-circuit thermoelectromotive force Vs, based on the measured temperature difference $\Delta$Ts at the thermocouple 120, by the resistor r. The circuit is configured so that the same short-circuit current Is also flows through the feedback resistor Rf in the operational amplifier, and the output voltage $V_{SO}$ at the operational amplifier can be expressed as Vs(1 + Rf/r). Therefore, the measured temperature $\Delta$Ts can be calculated using the output voltage $V_{SO}$, a prefixed open-circuit thermoelectromotive force Vs of the thermocouple (detecting thermocouple), or a calibration data based on an open-circuit thermoelectromotive force Vr and the temperature difference of a separately-prepared calibrating thermocouple. As a calibrating thermocouple, a thermocouple made of the same thermoelectric material, including the level of impurity, as the detecting thermocouple is used, or at least a material convertible thereto is used.

To describe in more details, in this circuit configuration, the open-circuit thermoelectromotive force Vs that is based on the measured temperature difference $\Delta$Ts generated in the thermocouple 120, does not substantially flow into the non-inverting input terminal, because of the imaginary short in the operational amplifier. Therefore, the voltage drop at the thermocouple 120 can be ignored, and all of the open-circuit thermoelectromotive force Vs is applied to the resistor r, connected to the inverting input terminal, regardless of the level of the actual internal resistance $r_{s0}$ in the thermocouple 120. Therefore, considering a closed circuit (equivalent short circuit) including the thermocouple 120, the resistor r, and the ground, located at the input side of the operational amplifier, the resistor r can be equivalently considered as the equivalent internal resistance rs in the thermocouple 120. By selecting the small resistance r in this manner, the thermocouple 120 with the equivalently-small internal resistance is achieved. Therefore, a large short circuit Is flows with respect to the same thermoelectromotive force Vs. By selecting the feedback resistor Rf appropriately, a large output voltage $V_{so}$ can be taken out. Therefore, this circuit configuration can be suitably called an equivalent current detection type thermocouple.

If the resistor r is a fixed resistance of 10 ohms, for example, the equivalent resistance rs of the thermocouple 120 will be 10 ohms, which equals to the resistance r, even if the actual internal resistance $r_{s0}$ is, for example, 100 ohms. If the thermoelectromotive force Vs of 1 millivolt is generated at the thermocouple 120, as a thermal infrared sensor, upon receiving the infrared, the short-circuit current Is will be Vs/r = 100 microamperes. If the feedback resistor Rf is selected at Rf = 10 kiloohms, the output voltage $V_{SO}$ at the operational amplifier will be 1.0 volt. One needs to be careful, because if the feedback resistance Rf is too large with respect to the resistance r, the output voltage $V_{SO}$ at the operational amplifier will become larger than a direct-current power supply voltage, saturating the operational amplifier. In addition, if the actual internal resistance $r_{s0}$ in the thermocouple 120 is too large, the noise will be increased, and the S/N will be reduced. Especially, a thermopile that includes serially-connected thermocouples may be used as the thermocouple 120, but one needs to be careful because the internal resistance thereof will be increased.

Eighth Embodiment

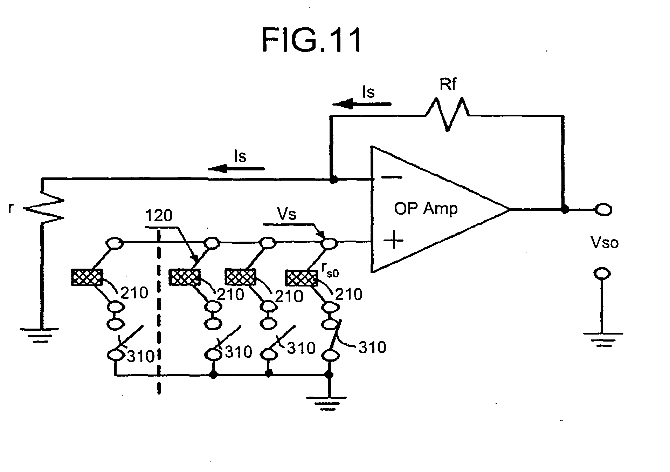

Fig. 11 is a diagram of an example of the equivalent current detection type thermocouple according to an embodiment of the present invention. Fig. 11 is basically the same as Fig. 10 showing the seventh embodiment. However, in Fig. 11, the single operational amplifier is used to take out an output of each of a plurality of the thermocouples. The output of the thermocouples 120 is taken out as the output voltage $V_{SO}$ of the operational amplifier, by selecting the output of each of thermocouples 120 using the switches 310. Fig. 11 is a circuit diagram of this embodiment, where the thermocouples 120 is applied to the thermal infrared sensor (having the infrared light-receiving units 210), and further applied to an uncooled image sensor, for example. The uncooled image sensor is formed from an extremely large number of the light-receiving units 210 that are integrated into a small area. Therefore, it is preferable, upon implementing the uncooled image sensor onto an actual sensor chip, to use shared wirings on the substrate as much as possible to avoid jamming of the wires.

Generally, an analog switch has a relatively high internal resistance approximately of 100 ohms. Therefore, when the analog switch is to be used for the switches 310, to make a circuit that can ignore the internal resistance of the analog switch, the thermocouples 120 and the switches 310, each of which is serially connected to each of the thermocouples 120, are connected to the non-inverting input terminal of the operational amplifier. The thermoelectromotive force Vs at one of the thermocouple 120, connected to the ON switch 310 among the switches 310, is selected, and the thermoelectromotive force Vs is then applied to the resistor r. In this manner, the short-circuit current Is flows in the same manner as the seventh embodiment described above, as shown in Fig. 10.

Ninth Embodiment

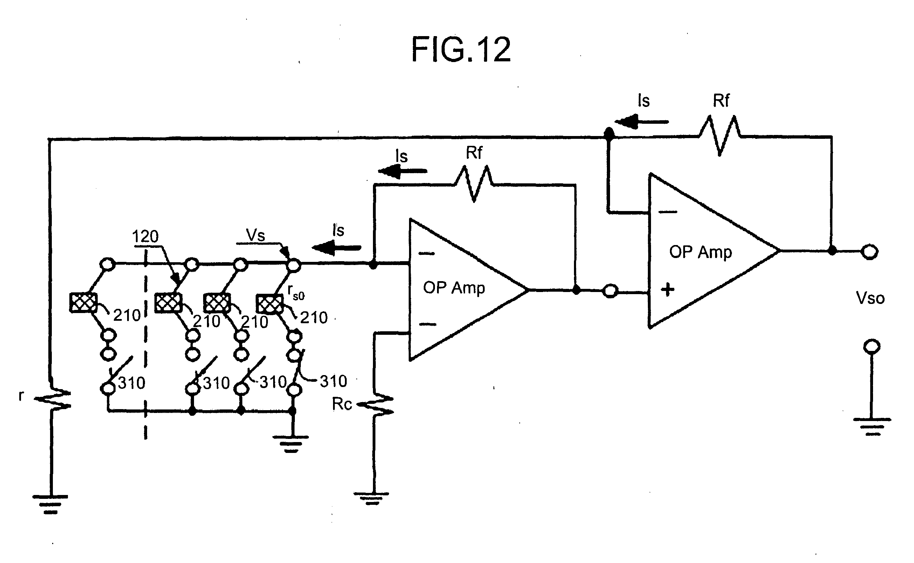

Fig. 12 is a diagram of an example of the equivalent current detection type thermocouple according to an embodiment of the present invention. In Fig. 12, the circuit configuration according to the sixth embodiment, shown in Fig. 9, is applied to Fig. 11 showing the eighth embodiment. Fig. 12 is a schematic diagram of a circuit configuration, where the equivalent current detection type thermocouple is applied to a thermal infrared sensor, an uncooled image sensor, for example, in the same manner as in Fig. 11 showing the eighth embodiment.

Tenth Embodiment

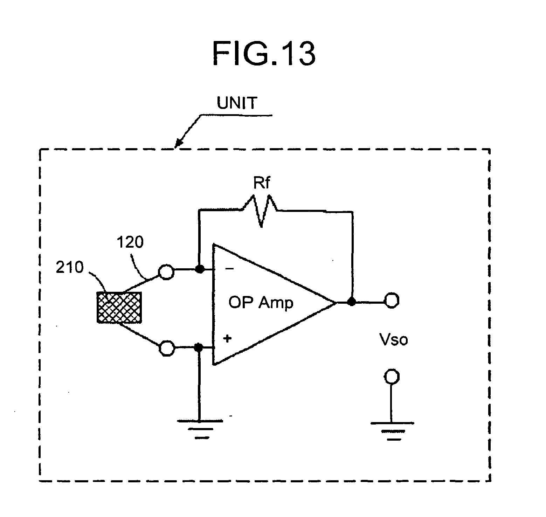

Fig. 13 is a schematic diagram of a unit that combines the thermocouples 120 and the operational amplifier (OP Amp). In other words, a circuit includes a pair of the thermocouples 120 and the operational amplifier (OP Amp) that uses the imaginary short, and the short-circuit current is converted to a voltage based on the thermoelectromotive force flowing through the thermocouples 120, and this circuit is handled as a unit. This circuit is used as a unit for a thermal infrared sensor, providing the hot junction of the thermocouples at the light-receiving unit 210. Of course, it is better to form the light-receiving unit 210 on a thin film that is thermally separated from the substrate. This unit can be used in place of the thermocouple according to the embodiments, by further connecting to an inverting input terminal or a non-inverting input terminal of an operational amplifier (OP Amp).

Eleventh Embodiment

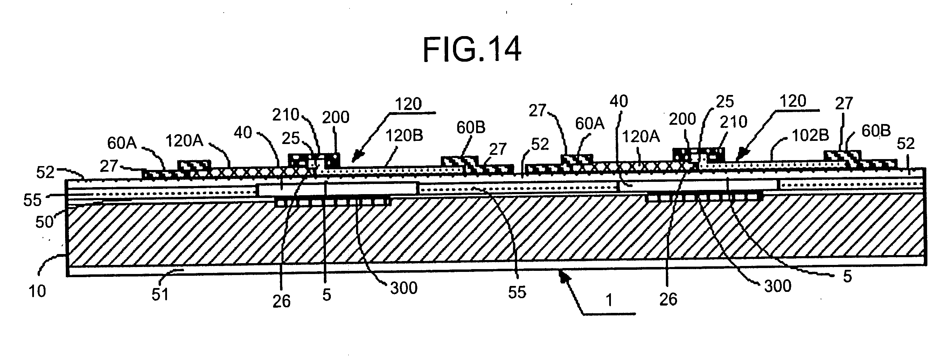

Fig. 14 is a cross-sectional view of an example of the current detection type thermocouple according to an embodiment of the present invention applied to a thermal infrared sensor. A plurality of the thermocouples 120 is formed on the same substrate 10, to form a thermal infrared sensor relay. Furthermore, the thin film 5, which is to be the light-receiving unit 210 thermally separated from the substrate 10, is formed in the cavity area 40 that is created by partially removing a sacrifice layer 55 by etching. Still furthermore, in this embodiment, an integrated circuit 300 is provided on an area below the cavity area 40 on the substrate 10. The integrated circuit 300 makes up a part of peripheral circuit, including elements such as the switches 310, of the thermal infrared sensor. The infrared absorbing film 200 is formed on the light-receiving unit 210 of the thermal infrared sensor relay, and this part functions as the hot junction 26 of the thermocouple 120. The cold junction 27 of each of the thermocouples is formed on the substrate 10 that functions as a heat sink. The conductor 120A that is one of the conductors of the thermocouple 120, is made from a crystalline silicon thin film having an n-type impurity in a high density enough to degenerate. A nickel (Ni) thin film, having a Seebeck coefficient with a different sign from that of an n-type semiconductor (polycrystalline silicon thin film, in this example), should be used for the other conductor 120B. The same reference numbers are assigned in the diagram as those explained in the embodiments. Moreover, the sensor chip 1 can be manufactured by a known process of MEMS technology using the substrate 10 made of single-crystalline silicon. Therefore, the detailed descriptions are omitted herein.

In the embodiment shown in Fig. 14, the one conductor 120A and the other conductor 120B of the thermocouple 120 are made from the thin film 5 having a cross-linking structure, and extended to opposing directions. However, the insulating film may be also sandwiched between the one conductor 120A and the other conductor 120B, as shown in Fig. 1 or 6, and the beams supporting the light-receiving unit 210 may also have the same sandwich-like structure.

Upon applying the thermal infrared sensor relay to the uncooled image sensor, each of the infrared light-receiving unit 210 generally makes up a single pixel. Therefore, the integrated circuit 300, having switches for selecting the light-receiving unit 210, resistances, and capacitors, needs to be arranged near each of the pixels. In addition, the ratio of area occupied by the light-receiving units should be greater, so that a larger amount of infrared is received. It is effective to arrange the integrated circuit 300 behind the infrared light-receiving unit 210, as explained for this embodiment, to satisfy these needs.

Twelfth Embodiment

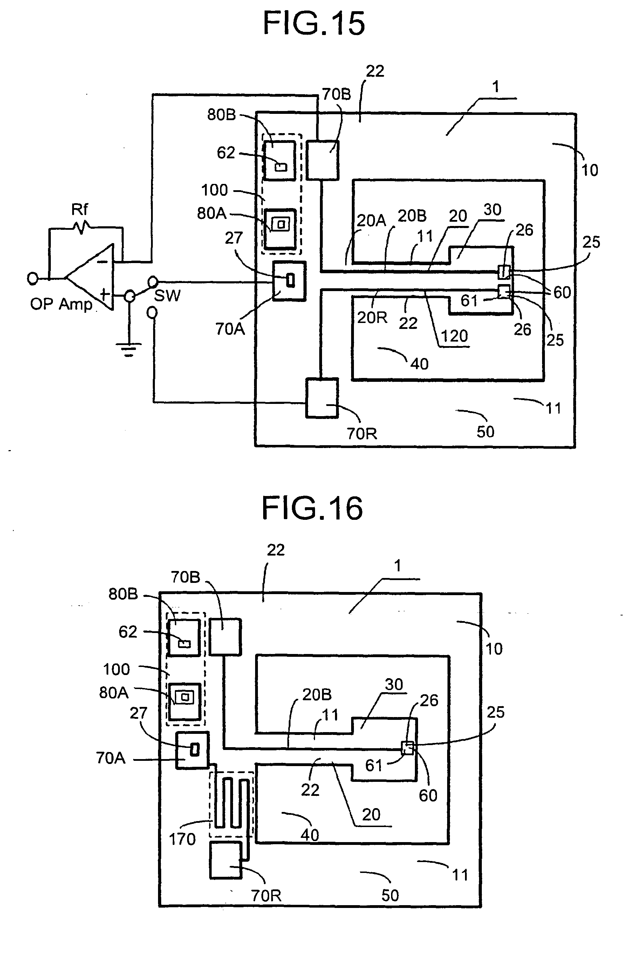

Fig. 15 is a schematic plan view of the sensor chip 1 provided with the current detection type thermocouple, and a schematic of the circuit of the operational amplifier provided therein, explaining an example of a method for calibrating an offset of an operational amplifier used for detecting the short-circuit current in the current detection type thermocouple according to an embodiment of the present invention. Two pairs of the thermocouples 20, 120 are formed on the cantilever 30, on which the same measured temperature difference $\Delta Ts$ is generated, so as to enable the thermoelectromotive forces to be connected in directions opposing to each other. The measured temperature difference $\Delta Ts$, generated between a tip and a supporting side of the cantilever 30, can be measured when a switch SW is switched to the side of the thermocouple 20 that is one of the pairs. When the switch SW is switched to the side of an electrode pad 70R of the other thermocouple 120, the thermoelectromotive forces at the thermocouples 20, 120 are connected in opposing directions and cancelled out by each other. Therefore, originally no short-circuit flows. Hence, the offset of the operational amplifier should be zero at this time. In this embodiment, the offset of the operational amplifier (OP Amp), generated for example by a temperature drift, can be calibrated with reference to this state.

In Fig. 15, the high density n-type diffusing area 22 is formed deeply on the entire surface of the SOI layer 11 of the substrate 10 that is made from a SOI substrate. The two pairs of the thermocouples 20, 120 are formed on the cantilever 30 that is formed from the SOI layer 11. In each of the thermocouples 20, 120, a low resistance semiconductor layer having the degenerated n-type diffusing area 22, which is one of the conductors included in the thermocouple, the conductor 20A, is used as a common conductor. The hot junctions 26 are located at the electrodes 60, which are the junctions 25, arranged at the tip of the cantilever 30, of the thermocouples. The cold junction 27 is located at the electrode pad 70A. (Because the substrate 10 is considered to have the same temperature, the substrate 10 can be also considered as the cold junction 27.) The other conductors 20B, 20R, included in the thermocouples 20, 120, may be made from a nickel (Ni) or an aluminum (Al) thin film. If the conductors 20B, 20R are to be exposed to high temperature, it is preferable to manufacture the thin film using a metal that is hard to oxidize, such as platinum or gold. In Fig. 15, the pn-coupled diode, which is the absolute temperature sensor 100, is also formed on the substrate 10, so that the temperature of the cold junction 27 of the current detection type thermocouple, formed on the cantilever 30, can be measured.

Although not shown in Fig. 15, the cantilever 30 can be used as a light-receiving unit for an infrared sensor. If the cantilever 30 is to be used for this purpose, an infrared absorbing film, such as gold black, may preferably be formed on the entire surface, or at a tip area of the cantilever 30. It should be needless to say that such an infrared sensor can also be combined with a micro heater and used as various thermal sensors for detecting reaction heat or fluid body.

Thirteenth Embodiment

Fig. 16 is a diagram of another example of the method for calibrating an offset of an amplifier used for detecting the short-circuit current in the current detection type thermocouple according to an embodiment of the present invention. In this example, a predetermined resistor 170, whose thermoelectromotive force is ignorable, is provided. The resistor 170 can be connected to an input stage of the same or another operational amplifier, so that the output from the operational amplifier based on the current detection type thermocouple can be compared with that from the operational amplifier based on this resistor. Based on the comparison data, the offset of the operational amplifier is calibrated. In this embodiment, the current detection type (detecting) thermocouple 20 is formed on the cantilever 30, made from the SOI layer 11, in the same manner as in the twelfth embodiment, shown in Fig. 15.

Although the operational amplifier is not shown in Fig. 16, a single operational amplifier (OP Amp) is used in this example, and a circuit thereof is configured using a switch SW, so that a connection to the input stage of the operational amplifier can be switched between the current detection type thermocouple and the predetermined resistor 170, instead of the current detection type thermocouple. When the input stage is connected to the predetermined resistor 170, the offset should be zero. Therefore, the offset of the operational amplifier, used for detecting short-circuit current, is calibrated with reference to this state. In Fig. 16, the resistor 170 is formed on the substrate 10. However, the resistor 170 may also be formed on the cantilever 30 using a thin film resistor made of a metal that has a low resistance temperature coefficient and is hard to oxidize, such as nichrome. It is preferable, in view of a balance of circuitry, that the resistor 170 is equal to an internal resistance of a system including the electrode pads 70A, 70B of the current detection type (detecting) thermocouple 20.

Fourteenth Embodiment

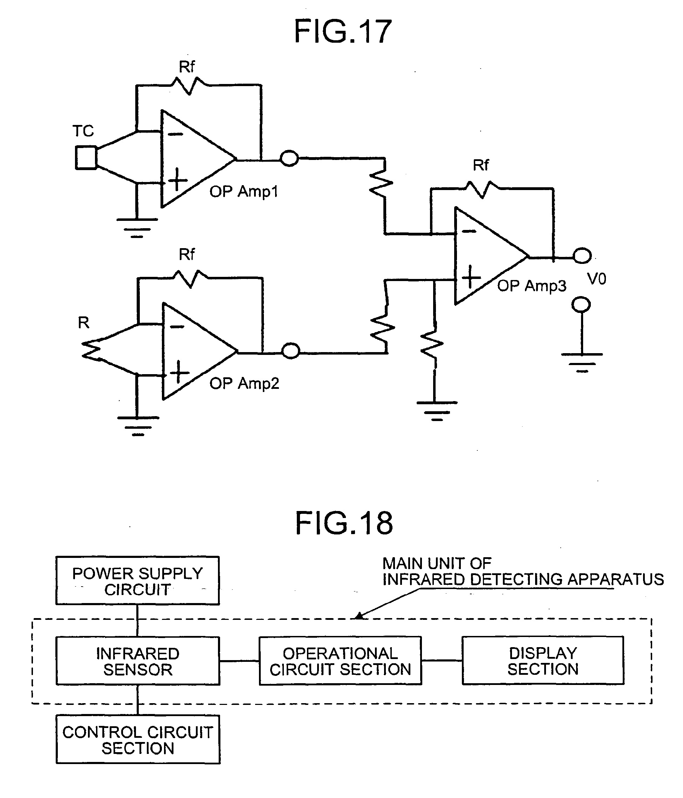

Fig. 17 is a schematic diagram of a measuring circuit, explaining still another example of the method for calibrating an offset of an operational amplifier used for detecting a short-circuit current of the current detection type thermocouple according to an embodiment of the present invention. In the same manner as in the thirteenth embodiment shown Fig. 16, the offset of the operational amplifier (OP Amp1) is calibrated using a predetermined resistor R whose thermoelectromotive force is ignorable. However, in the fourteenth embodiment, the resistor R is connected to an input stage of another operational amplifier (OP Amp2), so that the output of the operational amplifier (OP Amp1) with the current detection type thermocouple TC can be compared with that of the operational amplifier (OP Amp2) with the resistor R, at a differential amplifier circuit (OP Amp3). Based on these comparison data, the offset of the operational amplifier is calibrated. It is preferable that these three operational amplifiers (OP Amp1, OP Amp2, and OP Amp3) be formed within an IC element on the same semiconductor chip. It is preferable that, at least, the operational amplifier (OP Amp1) for the thermocouple TC and the operational amplifier (OP Amp2) for the resistor R be formed on the same semiconductor chip. The resistor R may be formed on the same substrate 10 where the current detection type thermocouple TC is formed, as described for the thirteenth embodiment shown in Fig. 16. If possible, it is preferable that the resistor R be formed together on an area where the thermocouple TC is formed, such as on the cantilever 30, also in view of noise removal.

Fifteenth Embodiment

Fig. 18 is a block circuit diagram of an example of an infrared detecting apparatus using the current detection type thermocouple according to an embodiment of the present invention. A main unit of this infrared detecting apparatus includes a thermal infrared sensor using the current detection type thermocouple, an operational circuit section, and a display section. In this example, the infrared detecting apparatus also includes a control circuit section that provides various controls, including those for a power supply circuit that supplies power, and a driving circuit that enables the infrared detecting apparatus to be operated.

The current detection type thermocouple, the thermal infrared sensor, the infrared detecting apparatus, and the current detection type thermocouple calibration method according to the present invention are not limited by the embodiments above in any way, and various modification thereof are still possible without deviating from the essence, effects, and advantages of the present invention.

INDUSTRIAL APPLICABILITY

There has been a need to measure a temperature of a measured target without using a chopper, in a tympanic temperature sensor, which is a thermometer using a thermal infrared sensor, or a radiation thermometer, so that the temperature can be measured with a small-sized and inexpensive apparatus. Because a thermocouple can basically detect only a temperature difference, a temperature of a target can be measured advantageously by using a thermal infrared sensor provided with the thermocouple having an infrared absorbing film, to detect the amount of the infrared as a temperature increase. Of course, an absolute temperature of a cold junction, which will be the reference point for the temperature sensor, needs to be known. However, it is more advantageous in various calibrations to detect the referential temperature using a thermistor as the absolute temperature, and to further detect only the temperature increase (only temperature difference), generated in receiving the infrared, based on the referential temperature, rather than to use the thermistor alone that can only measure the absolute temperature. This is because a thermistor always requires a compensating element for detecting the temperature difference.

Conventionally, a thermopile has been used because a single thermocouple is extremely low in sensitivity. In the thermopile, a number of thermocouples are connected in serial, so that the open-circuit thermoelectromotive force of each of the thermocouples adds up, increasing an output voltage. However, on the thermopile, extremely thin patterns of the thermopile (for example, 2 micrometers in width) need to be formed. Because the lines and the space width require precision, advanced technology and expensive facilities have been required.

In contrast to the above, the temperature difference detecting method according to the present invention uses a thermocouple as a current detection type. Such a thermocouple is made of a material that has an internal resistance as low as possible, and includes a thin film made of a material having a high Seebeck coefficient and a low heat conductivity, and a measurement is made using a current detecting unit that can make the internal resistance for the current flowing through the thermocouple ignorable. Because the temperature difference is measured using such a temperature difference detecting unit, a small thermoelectromotive force will generate a large current flow, thus achieving highly sensitive sensor. However, especially in a thermocouple using a semiconductor, the Seebeck coefficient, as well as the internal resistance thereof, varies slightly depending on a density, a distribution, or a type of impurity. Therefore, some kind of calibration has been necessary.

In the current detection type thermocouple and the calibration method thereof according to the present invention, the calibrating thermocouple and the detecting thermocouple can be formed on the same substrate, and the thin film thermocouples manufactured at the same can be used. Therefore, advantageously, it is possible to calibrate the detecting thermocouple at a high precision using the calibrating thermocouple having the same properties as the detecting thermocouple, based on a temperature difference generated by a heater, for example. Furthermore, by using a highly precise sensor chip having the calibrating thermocouple described above, it is possible to provide a more inexpensive radiation thermometer, such as an ear thermometer, which uses infrared and is difficult to calibrate with the detecting thermocouple alone.

Although it is not so problematic in a highly precise operational amplifier, an offset variation could occur upon using an inexpensive operational amplifier, due to temperature drift, for example. Therefore, upon detecting an extremely low input current, the operational amplifier needs be corrected and calibrated. In the method for calibrating an offset of an operational amplifier used for detecting a short-circuit current of the current detection type thermocouple according to the present invention, the operational amplifier can be corrected and calibrated at high precision using another thermocouple formed separately, or a predetermined resistor. Therefore, it is possible to provide a high precision sensor for measuring a temperature difference.

In the temperature difference detecting method, a thermocouple is used as a current detecting type, and the thermocouple is made of a material that has an internal resistance as low as possible, and includes a thin film made of a material having a high Seebeck coefficient and a low heat conductivity, and a measurement is made using a current detecting unit that can make the internal resistance for the current flowing through the thermocouple ignorable. Because the temperature difference is measured using such a temperature difference detecting unit, a small thermoelectromotive force will generate a large current flow, thus achieving highly sensitive sensor. However, especially in a thermocouple using a semiconductor,

In a sensor using a plurality of the thermocouples as a thermal infrared sensor array, such as an image sensor, each of the thermocouples needs to be switched using a switch and selected in time series, to display an output from each of the thermocouples. In the current detection type thermocouple according to the present invention, even in a configuration where the thermocouples are attached to the inverting-input side of the operational amplifier, a switch may be serially connected to each of the thermocouples. However, it would be a problem if the internal resistances of the switches are high. Therefore, a so-called equivalent current detection type thermocouple is proposed. In the equivalent current detection type thermocouple, a circuit is configured so that the internal resistance of the switch is made ignorable, by attaching the thermocouples and the switches that are serially connected thereto, to the non-inverting-input side of the operational amplifier, and by attaching a predetermined small resistor r to the inverting-input side of the operational amplifier, instead of the thermocouples. In this manner, the resistor r would appear as an equivalent internal resistance of the thermocouples. Advantageously, this equivalent current detection type thermocouple enables the internal resistance of the thermocouples or that of the switches to be handled as the resistor r, which is attached to the inverting-input side of the operational amplifier, even if the internal resistances of the thermocouples or the switches become somewhat high.

When the current detection type thermocouple according to the present invention is used as a thermal infrared sensor, a peripheral circuit, including the switches of the thermal infrared sensor for example, is provided below the light-receiving unit, as an integrated circuit. In this manner, it is possible to increase a substantial area ratio of the sensor chip making up the light-receiving unit, enabling a highly sensitive thermal infrared sensor to be provided with a high S/N.

The current detection type thermocouple according to the present invention is advantageous in that the absolute temperature sensor can be embedded into the substrate, and that a semiconductor coupling, such as a diode or a transistor, can be used for the absolute temperature sensor. Therefore, a highly precise sensor chip can be provided inexpensively, by using the matured semiconductor microfabrication technology, also taking advantage of single crystal silicon, which is a current mainstream material for the integrated circuit.

**Claims**

1. A method for calibrating a current detection type thermocouple that detects a temperature difference using a short-circuit current flowing in a pair of thermocouples, the method comprising:

    with a calibrating thermocouple formed of a same thermocouple material as that of a detecting thermocouple, determining an absolute thermoelectric power $E_{ro}$ of the calibrating thermocouple using an open-circuit thermoelectromotive force Vr where a heating unit generates a given temperature difference $\Delta Tr$ between two junctions, a hot junction and a cold junction, of the calibrating thermocouple, and the temperature difference $\Delta Tr$ is measured, wherein the detecting thermocouple is deemed to have the same absolute thermoelectric power $E_{ro}$; measuring an internal resistance $r_s$ of a system provided with the detecting thermocouple at a temperature around a measured temperature; measuring a short-circuit current $I_s$ caused due to a measured temperature difference $\Delta Ts$ generated at the detecting thermocouple, by using an imaginary short in an operational amplifier with the detecting thermocouple being connected to an inverting input terminal the an operational amplifier; and determining the measured temperature difference $\Delta Ts$ by using the absolute thermoelectric power $E_{ro}$ of the calibrating thermocouple and the internal resistance $r_s$.

2. The method for calibrating a current detection type thermocouple according to claim 1, wherein the calibrating thermocouple and the detecting thermocouple are thin film thermocouples formed on a same substrate.

3. The method for calibrating a current detection type thermocouple according to claim 1 or 2, wherein a heater is used as the heating unit.

4. The method for calibrating a current detection type thermocouple according to any one of claims 1 to 3, wherein the temperature difference $\Delta Tr$ between the two junctions of the calibrating thermocouple is measured with a pair of temperature sensors provided on a same substrate where the calibrating thermocouple is provided.

5. The method for calibrating a current detection type thermocouple according to any one of claims 1 to 4, wherein a semiconductor, added with an impurity in a density high enough to degenerate so as to reduce a resistance thereof, is used as at least one of conductors provided to the thermocouples.

6. The method for calibrating a current detection type thermocouple according to any one of claims 1 to 5, wherein one junction of a thin film detecting thermocouple is formed on a thin film that is thermally separated from a substrate, and the other end of the thermocouple is formed on the substrate.

7. A method for calibrating an offset of an operational amplifier used for detecting a short-circuit current in an current detection type thermocouple detecting a temperature difference using a short circuit current in the thermocouple, wherein a predetermined resistor having an ignorable thermoelectromotive force is provided; the resistor is connectable to an input stage of a same or another operational amplifier to which the current detection type thermocouple is connected; an output of the operational amplifier provided with the thermocouple is compared with an output of the operational amplifier provided with the resistor; and the offset of the operational amplifier is calibrated based on comparison data.

8. The method for calibrating an offset of an operational amplifier according to claim 7, wherein the method uses a single operational amplifier capable of switching from the thermocouple connected to an input stage of the operational amplifier to a predetermined resistor, and uses data obtained at the shift to the predetermined resistor for calibration.

9. A method for calibrating an offset of an operational amplifier used for detecting a short-circuit current in a current detection type thermocouple detecting a temperature difference using a short-circuit current flowing therethrough, the method comprising:

with two pair of thermocouples provided at positions where a same measured temperature difference $\Delta Ts$ occurs so that the thermocouples are connectable in directions opposing to each other, measuring the measured temperature difference $\Delta Ts$ with one of the thermocouples; and calibrating the offset of the operational amplifier when the thermocouples are connected in the directions opposing to each other so that thermoelectromotive force of each of the thermocouples is cancelled out by the other.

10. A current detection type thermocouple that detects a temperature difference using a short-circuit current flowing therethrough, the thermocouple comprising a heating unit provided on a same substrate where the current detection type thermocouple is provided.

11. A current detection type thermocouple that detects a temperature difference using a short-circuit current flowing therethrough, wherein a junction, functioning as one end of the thermocouple, is formed on a thin film that is thermally separated from a substrate; the other end of the thermocouple is formed on the substrate; a conductor, included in the thermocouple, has a low resistivity of $5 \times 10^{-2}$ $\Omega$·cm or below; two conductors included in the thermocouple have a sandwich-like structure with an insulating film interposed; and the thin film provided with the junction is supported by a plurality of beams of the sandwich-like structure.

12. A current detection type thermocouple that detects a temperature difference using a short-circuit current flowing therethrough, wherein an output of each of a plurality of thermocouples is taken out independently using a switch that is serially connected to each of the thermocouples; these thermocouples are connected to an inverting input terminal of an operational amplifier; and an imaginary short in the operational amplifier is made available so as to measure the short-circuit current flowing through the thermocouples.

13. An equivalent current detection type thermocouple, wherein a pair of thermocouples or a plurality of pairs of thermocouples, serially connected to each other, are connected to a non-inverting input terminal of an operational amplifier; a resistor r is connected to an inverting input terminal of the operational amplifier; an open-circuit thermoelectromotive force Vs based on a measured temperature difference $\Delta Ts$ of the thermocouples is directly applied to the resistor r using an imaginary short in the operational amplifier, and a short-circuit current Is flows thereto based on the open-circuit thermoelectromotive force Vs; the short-circuit current Is is obtained by dividing the open-circuit thermoelectromotive force Vs by the resistor r that is an equivalent internal resistance rs; the short-circuit current Is is also caused to flow into an feedback resistor Rf connected between the inverting input terminal of the operational amplifier and an output terminal thereof; and the measured temperature difference $\Delta Ts$ is calculated from an output voltage at the operational amplifier based on the foregoing.

14. The current detection type thermocouple according to claim 13, wherein the resistor r has a resistance smaller than an actual internal resistance $r_{s0}$ of the thermocouples.

15. The current detection type thermocouple according to claim 13 or 14, wherein the thermocouples are provided in a plurality; and an output from each of the thermocouples is taken out independently using a switch that is serially connected to each of the thermocouples.

16. A current detection type thermocouple, wherein a pair of the current detection type thermocouples, detecting a temperature difference by detecting a short-circuit current flowing therethrough using an imaginary short in an operating circuit, is used as a single unit; the unit is provided in a plurality; and an output from each of the units is taken out independently using a switch that is serially connected to each of the units.

17. The current detection type thermocouple according to any one of claims 12 to 16, wherein a junction of the thermocouple is formed on a thin film that is thermally separated from a substrate.

**18.** The current detection type thermocouple according to any one of claims 11 or 17, wherein the thermocouple is provided with two types of conductors; these conductors are guided to the substrate via a plurality of beams supporting the thin film; the conductors having a low resistivity of $5 \times 10^{-2}$ $\Omega \cdot$cm or below on the substrate are configured together to form two terminals.

**19.** A current detection type thermocouple, wherein at least a pair of thermocouples are provided to each of a plurality of cantilevers made from a thin film provided on a substrate; the thermocouples, formed on each of the cantilevers, are connected together in parallel to form two terminals; and a temperature difference is measured by detecting a short-circuit current flowing through the thermocouples between the two terminals, using an imaginary short in an operational amplifier.

**20.** The current detection type thermocouple according to any one of claims 11 and 17 to 19, wherein an absolute temperature sensor is provided to the substrate supporting the thin film, on which the thermocouple is formed, to enable measurement of a temperature at the substrate.

**21.** An infrared sensor comprising the current detection type thermocouple according to any one of claims 10 to 20, wherein an infrared absorbing film is provided at least near a junction of the thermocouple.

**22.** The infrared sensor according to claim 21, wherein at least a part of a peripheral circuit of the infrared sensor is arranged on an area of the substrate, the area being located below the thin film on which the junction of the thermocouple is formed.

**23.** An infrared detecting apparatus comprising:

> an infrared sensor;
> an operational circuit section; and
> a display section that displays an operation result from an output of the infrared sensor according to claim 21 or 22.

# FIG.1

# FIG.2

# FIG.3

Is

Rf

20B

Is

20

OP Amp

200

20A

Vso

# FIG.4

Is

Rf

20B

Is

20

OP Amp

200

20A

Rc

Vso

# FIG.5

# FIG.6

# FIG.7

# FIG.8

# FIG.9

# FIG.10

# FIG.11

FIG.12

# FIG.13

UNIT

# FIG.14

EP 1 953 513 A1

# FIG.15

# FIG.16

# FIG.17

# FIG.18

**EP 1 953 513 A1**

| INTERNATIONAL SEARCH REPORT | International application No. |
|---|---|
| | PCT/JP2006/322842 |

A. CLASSIFICATION OF SUBJECT MATTER
*G01K15/00*(2006.01)i, *G01J1/42*(2006.01)i, *G01J5/14*(2006.01)i, *G01K7/02*(2006.01)i

According to International Patent Classification (IPC) or to both national classification and IPC

B. FIELDS SEARCHED

Minimum documentation searched (classification system followed by classification symbols)
G01K15/00, G01J1/42, G01J5/14, G01K7/02

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2005-221238 A (Mitsuteru KIMURA),<br>18 August, 2005 (18.08.05),<br>Full text; all drawings<br>(Family: none) | 10,21-23<br>1-9,11-20 |
| Y | JP 55-75625 A (Tokyo Shibaura Electric Co.,<br>Ltd.),<br>07 June, 1980 (07.06.80),<br>Full text; all drawings<br>(Family: none) | 10,21-23 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 February, 2007 (21.02.07) | Date of mailing of the international search report<br>27 February, 2007 (27.02.07) |
|---|---|
| Name and mailing address of the ISA/<br>Japanese Patent Office | Authorized officer |
| Facsimile No. | Telephone No. |

Form PCT/ISA/210 (second sheet) (April 2005)

33

**INTERNATIONAL SEARCH REPORT**

| International application No. |
|---|
| PCT/JP2006/322842 |

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:
   A matter common to the inventions in claims 10-23 that "a current detection type thermocouple for detecting a temperature difference using a shortcircuit current running through a thermocouple" and a matter common to the inventions in claims 12-23 that "a current detection type thermocouple for detecting a temperature difference using a shortcircuit current running through a thermocouple, wherein the virtual shortcircuit of an operational amplifier is used to measure a shortcircuit current running through a thermocouple" are both disclosed in document JP 2005-221238 A, and therefore the above two common matters do not make contribution over the prior art. (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable,
the                                   payment of a protest fee..

                                        ☐ The additional search fees were accompanied by the applicant's protest but the applicable protest fee was not paid within the time limit specified in the invitation.

                                        ☒ No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2006/322842 |

Continuation of Box No.III of continuation of first sheet(2)

Accordingly, since the inventions in claims 10-23 are not considered to be specifically designed device or a means to embody the inventions in claims 1-9 (a method of calibrating a current detection type thermocouple or a method of calibrating the offset of an operational amplifier for used in the shortcircuit current detection of a current detection type thermocouple), the inventions in claims 10-23 have no special technical feature and do not fulfill the requirement of unity of invention.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004026247 A

- JP 2005221238 A

**Non-patent literature cited in the description**

- **P. M. SARRO et al.** *Sensors and Actuators,* 1986, vol. 10, 321-346